# EUROPEAN PATENT APPLICATION

(11) **EP 4 841 434 A1**
(43) Date of publication of application: **18.11.2026**
(21) Application number: 26178214.8
(22) Date of filing: 12.05.2026
(51) Int. Cl.: G06F 9/445, G06F 40/20, G06N 3/02

(54) **ON-DEVICE LANGUAGE MODEL FOR SYNTAX-GUIDED RESPONSES**

(30) Priority: 14.05.2025 US 202563805668 P; 19.11.2025 US 202519393817; 19.11.2025 US 202519393865
(71) Applicant: Apple Inc., Cupertino, CA 95014 (US)
(72) Inventor: HORNBERGER, Erik D., Pittsburgh (US); D'HAUWE, Louis, Ben Lomond (US); PALMER, Alexander D., San Jose (US); HE, Yifei, Cupertino, 95014 (US); HUANG, Bowen, Mountain View (US); WEI, Xinran, San Francisco (US); DENNISON, John, Longmont (US); LI, Zhen, Santa Clara (US)
(74) Representative: COPA Copenhagen Patents

(57) **Abstract**

The present technology pertains to executing language models on personal computing devices, offering enhanced privacy and security over cloud-based solutions. It addresses the challenge of allowing third-party applications to access the robust capabilities of on-device language models while maintaining secure operations. Key innovations include an adapter management system that bridges the gap between application and system spaces, enabling seamless integration of fine-tuned models. Additionally, it proposes a mechanism for developers to create distilled models, which are smaller and more efficient, ensuring optimal performance on resource-constrained devices. The technology also facilitates simplified integration via software development kits (SDKs), enabling third-party apps to utilize system APIs. The present technology also simplifies the process of causing the language model to generate structured outputs, which enables third-party applications to easily leverage on-device language models to interact with tools via the APIs and to provide responses that comply with programming language types.

## Description

### BACKGROUND

To date, the benefits of running a language model on a personal computing device (i.e., on-device language model) have largely been limited to operations performed by the operating system of the personal computing device or to applications that are from the developer of the operating system (1st party applications).

One use of language models is to interpret unstructured data. While language models are good at understanding unstructured data, they are not good at producing responses that strictly conform to a structure.

### BRIEF DESCRIPTION OF THE SEVERAL VIEWS OF THE DRAWINGS

Details of one or more aspects of the subject matter described in this disclosure are set forth in the accompanying drawings and the description below. However, the accompanying drawings illustrate only some typical aspects of this disclosure and are therefore not to be considered limiting of its scope. Other features, aspects, and advantages will become apparent from the description, the drawings, and the claims.
FIG. 1 illustrates an example system embodiment in accordance with some aspects of the present technology.
FIG. 2 illustrates an example routine for utilizing a compiler to create a grammar for use in constraining the output (constrained decoding) of a language model in accordance with some embodiments of the present technology.
FIG. 3 illustrates an example routine for creating and using a prefix tree to aid the constrained decoding process in accordance with some embodiments of the present technology.
FIG. 4A a grammar defines a string "hello world."
FIG. 4B illustrates the prefix tree after the token "h" has been sampled.
FIG. 5 illustrates a timeline of various processes that take place during an inference operation of the language model when constrained decoding is used in accordance with some embodiments of the present technology.
FIG. 6 illustrates an example of an efficiency provided by the constrained decoding system in accordance with some embodiments of the present technology.
FIG. 7 illustrates an example routine for handling a grammar that has another grammar nested within it in accordance with some embodiments of the present technology.
FIG. 8A and FIG. 8B illustrate example sequence diagrams that illustrate instances in which the application would send instructions to the language model to generate outputs that are constrained by a grammar in accordance with some embodiments of the present technology.
FIG. 9 illustrates an example routine for calling one or more tools by a language model in accordance with some embodiments of the present technology.
FIG. 10 illustrates an example routine for creating a fine-tuned model and a distilled model and managing these assets by an app store and client device in accordance with some embodiments of the present technology.
FIG. 11 illustrates the adapter and the distilled model residing in an application space and being copied into a system space for the inference process in accordance with some embodiments of the present technology.
FIG. 12 illustrates an example routine for using the adapter and distilled model in an inference process in accordance with some embodiments of the present technology.
FIG. 13A, FIG. 13B, and FIG. 13C illustrates an example transformer architecture in accordance with some embodiments of the present technology.
FIG. 14 is a system diagram illustrating a device in accordance with some embodiments of the present technology.
FIG. 15 shows an example of a system for implementing some embodiments of the present technology.

### DETAILED DESCRIPTION

Various embodiments of the disclosure are discussed in detail below. While specific implementations are discussed, it should be understood that this is done for illustration purposes only. A person skilled in the relevant art will recognize that other components and configurations may be used without parting from the spirit and scope of the disclosure.

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims, or can be learned by the practice of the principles set forth herein.

Language models continue to show amazing potential in many different applications. However, many language models operate in a cloud environment that is inherently less secure than an operation that runs entirely or even mostly on a personal computing device.

It is possible to run language models on personal computing devices, and the language models still perform remarkably well despite the fact that personal computing devices are more resource-constrained than a public cloud. For example, personal computing devices have less powerful GPUs or neural engines, less memory, and often run on battery power. These tradeoffs are worth it in many instances because running language models on personal computing devices provides greater privacy and security for a user account's data.

To date, the benefits of running a language model on a personal computing device (i.e., on-device language model) have largely been limited to operations performed by the operating system of the personal computing device or to applications that are from the developer of the operating system (1st party applications). The present technology addresses several mechanisms by which the language model on the personal computing device can be made accessible to 3rd party applications as well.

One prominent challenge is providing developers access to the robust capabilities of the on-device language model while ensuring these language models can be securely operated. More specifically, some operating systems run the on-device language model in a secure environment in a system space, whereas applications tend to run in sandboxed environments in application space. This becomes a challenge when application developers wish to run a fine-tuned version of the language model, which generally requires providing an adapter layer of weights into memory with the weights of the language model. An adapter cannot be in application space while the language model is in system space. The present technology addresses this problem by managing the adapter and copying it into memory in system space when it is being used.

Another challenge is that because personal computing devices are resource-constrained, running a full version of the on-device language model can be slow. And slow performance might not yield the user experience that developers want to provide. Accordingly, the present technology provides developers with the ability to create their own distilled model, which is a smaller, compressed, and more efficient model that can often produce outputs that are on par with the larger on-device language model.

A potential advantage of giving 3rd party developers access to the on-device language model is that the operating systems of these personal computing devices are often associated with software development kits (SDKs) that make integrating 3rd party applications with operating system services, and services provided by other 3rd party apps, easy. These SDKs greatly simplify the development of 3rd party apps such that 3rd party apps can be more functional. Generally, these SDKs define APIs that applications can call. And now, as 3rd party apps gain access to the on-device language model, these 3rd party apps will want the on-device language model to make use of these APIs for their benefit.

APIs are generally in a structured syntax, and constraining a language model to provide an output in a structured way can be challenging. The process often requires defining a grammar that is used to constrain the output of the language model. The present technology aims to make this process simpler for 3rd party developers by merely providing the *type* for the data, and the present technology will interact with a compiler to generate the grammar. This approach obviates the need for JSON schema definition and parsing, ensuring developers receive well-structured outputs effortlessly.

As described above, some aspects of the present technology are specifically to enhance the privacy of a user of a personal computing device. However, the present technology might include the gathering and use of data available from various sources. The present disclosure contemplates that in some instances, this gathered data may include personal information data that uniquely identifies or can be used to contact or locate a specific person. Such personal information data can include demographic data, location-based data, telephone numbers, email addresses, user account identifiers, home addresses, data or records relating to a user's health or level of fitness (e.g., vital signs measurements, medication information, exercise information), date of birth, or any other identifying or personal information. The present disclosure recognizes that the use of such personal information data, in the present technology, can be used to the benefit of users.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. The present technology can be configured to allow users to select to "opt in" or "opt out" of participation in the collection of personal information data during registration for services or anytime thereafter. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data.

Despite the foregoing, the present disclosure also contemplates embodiments in which users selectively restrict and/or block the use of and/or access to data. That is, the present disclosure contemplates that hardware and/or software elements can be provided to prevent or block access to data. For example, in the case of some services, the present technology should be configured to allow users to select to "opt in" or "opt out" of participation in the collection of data during registration for services or anytime thereafter. In another example, the present technology should be configured to allow users to select not to provide certain data for training the AI/ML systems and/or for use as input during the inference stage of such systems. In yet another example, the present technology should be configured to allow users to be able to select to limit the length of time data is maintained or entirely prohibit the use of their data for use by the AI/ML systems. In addition to providing "opt in" and "opt out" options, the present disclosure contemplates providing notifications relating to the access or use of personal information. For instance, a user can be notified when their data is being input into the AI/ML systems for training or inference purposes, and/or reminded when the AI/ML systems generate outputs or make decisions based on their data.

The present disclosure recognizes AI/ML systems should incorporate explicit restrictions and/or oversight to mitigate against risks that may be present even when such systems have been designed, developed, and/or operated according to industry best practices and standards. For example, outputs may be produced that could be considered erroneous, harmful, offensive, and/or biased; such outputs may not necessarily reflect the opinions or positions of the entities developing or deploying these systems. Furthermore, in some cases, references to third-party products and/or services in the outputs should not be construed as endorsements or affiliations by the entities providing the AI/ML systems. Generated content can be filtered for potentially inappropriate or dangerous material prior to being presented to users, while human oversight and/or ability to override or correct erroneous or undesirable outputs can be maintained as a failsafe.

The present disclosure further contemplates that users of the AI/ML systems should refrain from using the services in any manner that infringes upon, misappropriates, or violates the rights of any party. Furthermore, the AI/ML systems should not be used for any unlawful or illegal activity, nor to develop any application or use case that would commit or facilitate the commission of a crime, or other tortious, unlawful, or illegal act. The AI/ML systems should not violate, misappropriate, or infringe any copyrights, trademarks, rights of privacy and publicity, trade secrets, patents, or other proprietary or legal rights of any party, and appropriately attribute content as required. Further, the AI/ML systems should not interfere with any security, digital signing, digital rights management, content protection, verification, or authentication mechanisms. The AI/ML systems should not misrepresent machine-generated outputs as being human-generated.

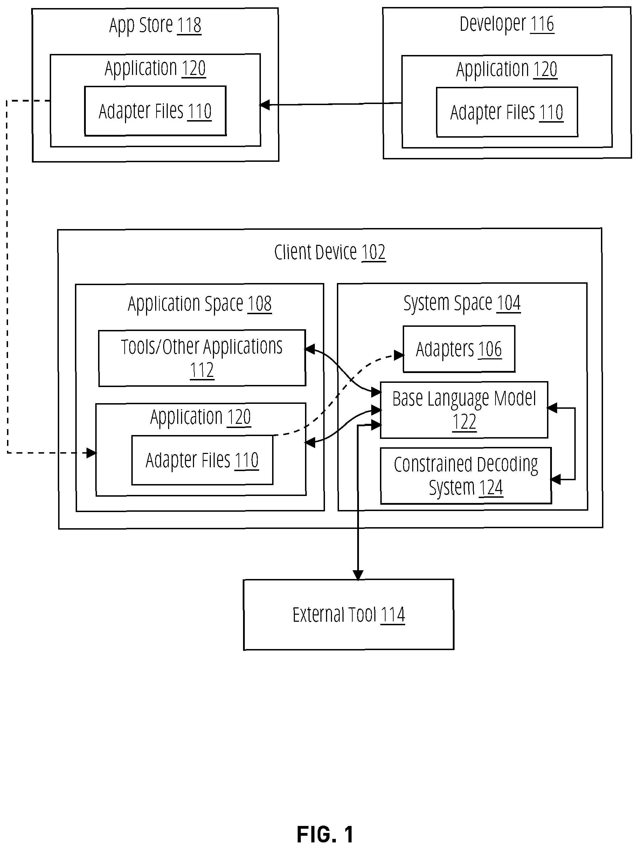

FIG. 1 illustrates an example system embodiment in accordance with some aspects of the present technology. Although the example system depicts particular system components and an arrangement of such components, this depiction is to facilitate a discussion of the present technology and should not be considered limiting unless specified in the appended claims. For example, some components that are illustrated as separate can be combined with other components, some components can be divided into separate components, some components might not be present or needed, and additional components may be present.

FIG. 1 illustrates a developer 116 that develops an application 120, which is then published in an app store 118. A user can operate client device 102 to download application 120 and execute application 120 on the client device 102.

More specifically, the developer 116 can develop the application 120 that is configured to make use of a base language model 122 on client device 102. In some embodiments, the application can be configured to use a fine-tuned base language model through the use of adapter files 110. As will be addressed in more detail herein, the adapter files 110 can include an adapter to the base language model 122, which makes the base language model 122 function as a fine-tuned base language model. The adapter files 110 can also optionally include a distilled model. The distilled model is distilled from a data set created from the fine-tuned base language model. The distilled model is a smaller model than the fine-tuned base language model that is configured to generate responses comparable to the fine-tuned base language model using less computing resources.

As illustrated in FIG. 1 the developer 116 can create an application 120 with the adapter files 110. The adapter files 110 can be hosted by the app store along with the application 120. In some embodiments, there can be many versions of the adapter files 110, which correlate to versions of the base language model 122 or versions of other software, such as operating systems on the client device 102.

As will be addressed herein, the application 120 and adapter files 110 can be downloaded to the client device 102, but they might not be downloaded all at the same time. The dotted line represents the fact that these files might be downloaded over the course of multiple transactions.

The client device 102 can be any computing device other than a device in a data center. Some specifically contemplated examples of the computing device include a smartphone, tablet, spatial computing device, smart device (such as IoT devices in a variety of form factors), laptop, etc. The client device 102 includes an application space 108 and a system space 104. The application space 108 is a sandboxed space specifically for application processes and its files. The system space 104 is a space for trusted processes, such as those that are part of the operating system.

The client device 102 includes an on-device language model, labeled as base language model 122. This language model is an AI engine that executes on the client device. As used herein, reference to the language model, base language model, on-device language model, or fine-tuned base language model all refer to a language model that operates on the client device 102. Further, while the language model might be, at its core, an autoregressive transformer model comprised of weights, the present description contemplates that various supporting services might be used with the language model, and reference to the language model explicitly includes such supporting services. For example, when a prompt is sent to the language model, the prompt might first be sent to some deterministic tool that supports the language model. Or, when the language model is described as creating a constrained output, that output might be created through use of a deterministic tool such as the constrained decoding system 124. Accordingly, reference to the language model should be interpreted to include the language mode itself and supporting processes.

As is addressed herein, one advantage of the base language model 122 is that it can interact with various tools such as tools/other applications 112 and external tool 114. The tools/other applications 112 can be tools provided by the operating system or can be other applications, including 3rd party applications that might be made accessible to the base language model 122 via an application programming interface (API) provided by the operating system software development kit (SDK). The external tool 114 can be tools, websites, and sources of data available over the Internet.

Whether the tools are tools/other applications 112 or external tool 114, these tools are generally called via APIs, which are programmatic calls that typically require communications in a defined syntax. The constrained decoding system 124 is a system that supports the base language model 122 to constrain the base language model 122 to output responses that match such a defined syntax when that is required.

Finally, client device 102 illustrates that the application 120 on the client device can have the adapter files 110 stored in application space 108. But, when such adapter files 110 need to be used by the base language model 122 they might be copied into system space 104 as represented as adapters 106.

The present technology will be addressed in greater detail herein by making reference to FIG. 1.

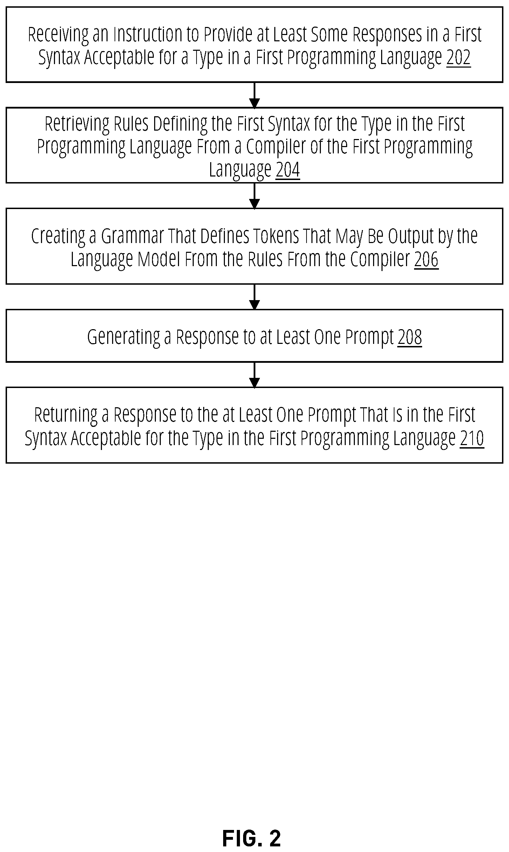

FIG. 2 illustrates an example routine for utilizing a compiler to create a grammar for use in constraining the output (constrained decoding) of a language model in accordance with some embodiments of the present technology. Although the example routine depicts a particular sequence of operations, the sequence may be altered without departing from the scope of the present disclosure. For example, some of the operations depicted may be performed in parallel or in a different sequence that does not materially affect the function of the routine. In other examples, different components of an example device or system that implements the routine may perform functions at substantially the same time or in a specific sequence.

Since language models are not deterministic by nature, they won't generally provide the same output to the same prompt on every occurrence. While this behavior leads to many of the latent benefits of language models, this behavior is also a hindrance to using language models in tasks that require a particular syntax. Constrained decoding in language models offers significant benefits by enabling these models to interact more effectively with external tools and perform a wider array of functions. By incorporating constraints during the decoding process, language models can adhere to predefined patterns, syntactical structures, or output formats that are necessary for interfacing with specific applications or systems. This capability ensures greater accuracy and reliability when the models are tasked with generating responses that must align with strict requirements, such as API calls, database queries, or controlled natural language commands. Consequently, constrained decoding enhances the usability of language models in practical applications by allowing them to operate seamlessly within complex workflows, execute tasks that require exactness, and augment their utility across diverse domains beyond simple text generation.

Developing a schema to guide constrained decoding in language models presents some challenges and is, at a minimum, a nuisance to an app developer. These difficulties arise primarily from the need to accurately define the constraints that dictate valid outputs while maintaining the language model's flexibility and generalization capabilities. Crafting a comprehensive schema requires a deep understanding of the task domain, the specific patterns or structures required for successful execution, and the potential variances in input data. Additionally, the schema must be robust enough to accommodate edge cases and variations, which often necessitates extensive testing and iteration. Often, these schemas are limited to being presented in a single programming language, such as JSON.

To alleviate some of the burden of developing a schema to guide constrained decoding, the present technology merely requires developers to provide a syntax for a desired response by providing the *type* for the data in the syntax, and the present technology will interact with a compiler to generate the grammar based on its knowledge of the type. This approach obviates the need for JSON schema definition and parsing, ensuring developers receive well-structured outputs effortlessly.

According to some examples, the method includes receiving an instruction to provide at least some responses in a first syntax acceptable for a type in a first programming language at block 202. For example, the base language model 122 illustrated in FIG. 1 may receive an instruction to provide at least some responses in a first syntax acceptable for a type in a first programming language. The instruction can come in the form of a configuration message, or a session initialization message, or a prompt based on which the language model will generate a response. In some embodiments, the first syntax can define one or more types in the SWIFT programming language, which is commonly used in APPLE's IOS operating system. SWIFT is a strongly typed language.

One important advantage of the present technology is that the developer does not need to specify a programming language or the first syntax. The base language model 122, working with a constrained decoding system 124, can identify the language and the type and can determine the first syntax based on the type. An example instruction can be to output data in the format:

```
      struct Person {
       var name: String
       var age: Int
      }
```

According to some examples, the method includes retrieving rules defining the first syntax for the type in the first programming language from a compiler of the first programming language at block 204. For example, the base language model 122 illustrated in FIG. 1 may retrieve rules defining the first syntax for the type in the first programming language from a compiler of the first programming language.

In some embodiments, the compiler is aware of the requirements of the SWIFT types, such as *String* and *Int.* In some embodiments, the compiler is able to translate between the SWIFT programming language and the JSON programming language, which can be useful when the language model is better at generating code in JSON.

Of course, these examples pertaining to SWIFT and JSON can apply to any coding languages as long as a compiler can provide a grammar relevant to the languages.

According to some examples, the method includes creating a grammar that defines tokens that may be output by the language model from the rules from the compiler at block 206. For example, the base language model 122 illustrated in FIG. 1 may create a grammar that defines tokens that may be output by the language model from the rules from the compiler. In some examples, grammar can be a Backus-Naur Form (BNF) grammar, but the present technology is not limited to this type of grammar.

An example grammar in JSON based on the *struct* "Person" in SWIFT can be:

```
      <person> = {"name": "<characters>", "age": <digits> }
```

According to some examples, the method includes generating a response to the at least one prompt at block 208. For example, the base language model 122 illustrated in FIG. 1 may generate a response to the at least one prompt. The prompt could have been provided with the instruction at block 202, or could have been provided in a subsequent communication. Note that neither the instruction nor the prompt needs to specify the output programming language for the language model. This complication is abstracted away from the concern of developers. Instead, the language model is trained to output a code language matching the grammar (e.g., in this example, JSON). The developer only needs to provide types in the first programming language (e.g., in this example, SWIFT).

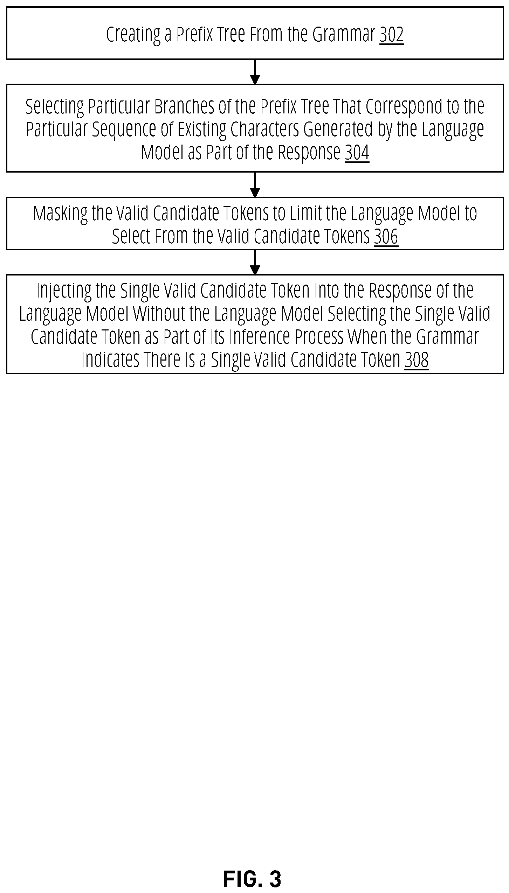

When generating the response, the language model is constrained by the grammar to output the tokens that are valid within the first syntax. The grammar constrains the language model by masking valid tokens from a distribution of candidate tokens so that the language model is limited to selecting the valid tokens from the distribution of candidate tokens. This process will be addressed in greater detail in FIG. 3 through FIG. 4B.

While the language model might output tokens that match the grammar in the second programming language (e.g., in this example, JSON), the instruction was in the first programming language (e.g., in this example, SWIFT), which implies that the developer intends the reply to be in the first programming language. Accordingly, generating the response to the prompt at block 208 can also include translating an internal response in the second programming language into a response in the second programming language. In some embodiments, it is the language model that can perform this translation. In some embodiments, the language model can call a tool that can deterministically perform this translation. For example, in the APPLE IOS operating system, a tool called GENERABLE exists to translate between JSON and SWIFT and vice versa.

According to some examples, the method includes returning a response to the at least one prompt that is in the first syntax acceptable for the type in the first programming language at block 210. For example, the base language model 122 illustrated in FIG. 1 may return a response to at least one prompt that is in the first syntax acceptable for the type in the first programming language.

FIG. 3 illustrates an example routine for creating and using a prefix tree to aid the constrained decoding process in accordance with some embodiments of the present technology. Although the example routine depicts a particular sequence of operations, the sequence may be altered without departing from the scope of the present disclosure. For example, some of the operations depicted may be performed in parallel or in a different sequence that does not materially affect the function of the routine. In other examples, different components of an example device or system that implements the routine may perform functions at substantially the same time or in a specific sequence.

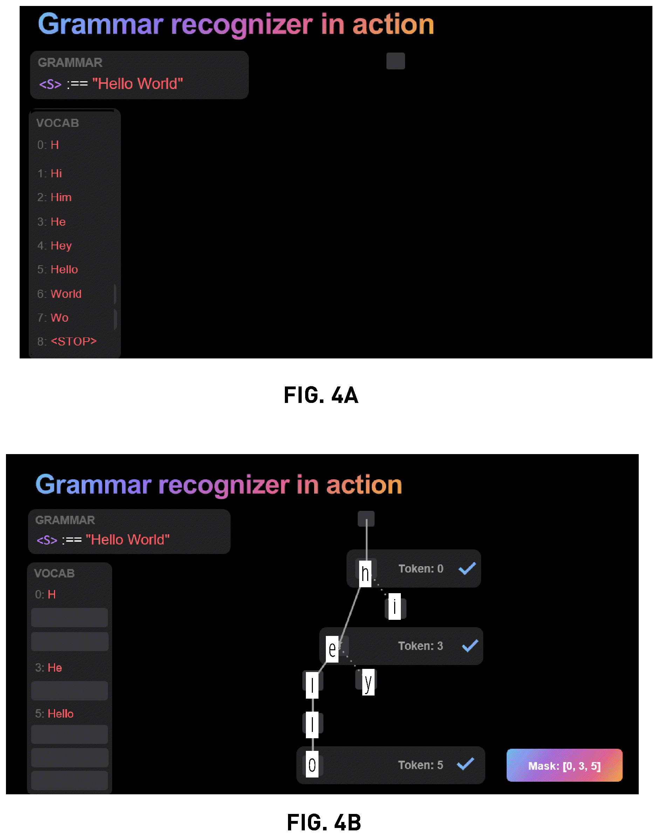

While the language model could evaluate the grammar during the inference process, it is significantly more efficient to use a deterministic process to mask out invalid tokens; this process can be made even more efficient through the use of a prefix tree (an example prefix tree is illustrated in FIG. 4B). Constrained decoding system 124 represents this deterministic process.

According to some examples, the method includes creating a prefix tree from the grammar at block 302. For example, the constrained decoding system 124 illustrated in FIG. 1 may create a prefix tree from the grammar.

As illustrated in FIG. 4A a grammar defines a string "hello world" and only this string is valid. For the purposes of illustration, FIG. 4A assumes that there is a limited set of tokens in order for the example to be shown in the figure, but in reality, the set of tokens is larger. Based on the set of possible tokens, a prefix tree can be created, either in advance or dynamically. The prefix tree includes branches that represent sequences of valid characters/tokens.

FIG. 4B illustrates the prefix tree after the token "h" has been sampled. Now, the subsequent token prefixes are limited to "i" or "e". Since any token with "i" as a character following "h" cannot be valid to arrive at the objective of "hello world" we can mask out tokens for "hi" and "him" (we have already masked out "world" and "wo" and "stop" since they didn't start with "h"). Any tokens that are masked have 0% probably of being the correct token, so there is no point in letting the language model consider them as possible tokens, and therefore, they can be masked out to prevent their selection.

After the prefix "e," the only other character prefixes that are possible in our original vocabulary are "1" and "y." Once "y" is ruled out because it will not lead to the objective of "hello world," we can mask out "hey," and we are only left with one token to sample, "hello."

According to some examples, the method includes selecting particular branches of the prefix tree that correspond to the particular sequence of existing characters generated by the language model as part of the response at block 304. For example, the constrained decoding system 124 illustrated in FIG. 1 may select particular branches of the prefix tree that correspond to the particular sequence of existing characters generated by the language model as part of the response. The particular branches correspond to valid candidate tokens. This process is repeated until a valid token is selected by the constrained decoding system 124 or the base language model 122.

According to some examples, the method includes masking the valid candidate tokens to limit the language model to select from the valid candidate tokens at block 306.

For example, the constrained decoding system 124 illustrated in FIG. 1 may mask the valid candidate tokens to limit the language model to select from the valid candidate tokens. The language model can only select the valid candidate tokens as the next token in the response.

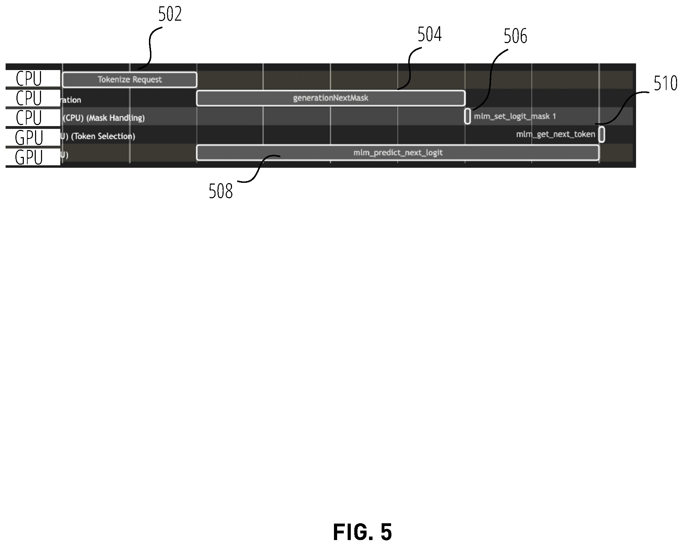

In some instances, such as the simple example of a grammar for "hello world," the constrained decoding process might arrive at only one possible token from which the language model can select. In such instances, the method includes injecting the single valid candidate token into the response of the language model without the language model selecting the single valid candidate token as part of its inference process when the grammar indicates there is a single valid candidate token at block 308. For example, the constrained decoding system 124 illustrated in FIG. 1 may inject the single valid candidate token into the response of the language model. This feature of the present technology also yields another efficiency, which is illustrated in FIG. 5.

FIG. 5 illustrates a timeline of various processes that take place during an inference operation of the language model when constrained decoding is used in accordance with some embodiments of the present technology.

In FIG. 5, the timeline progresses from left to right. As illustrated, the first process to be initiated is a tokenization process 502, wherein the prompt is tokenized. Tokenization refers to the process of breaking down the prompt (input text) into smaller units called tokens. These tokens can include words, subwords, or even characters, depending on the tokenization method used.

After the prompt is tokenized, the constrained sampling process 504 and the model interference process 508 are initiated at roughly the same time, but the constrained sampling process 504 is a faster process. This means that when the constrained sampling process 504 can mask all but one token in the masking of invalid tokens 506 from which to sample, the model interference process 508 can be terminated for that token, and the process can jump to select token 510, which selects the only valid token and restarts constrained sampling process 504 and model interference process 508 to determine a next token in a sequence. This reveals that constrained sampling process 504 can significantly speed up the model interference process 508 for the language model in situations where the token can be deterministically selected by the constrained sampling process 504.

Another advantage of the present technology is that the constrained sampling process 504 is a CPU-based process. Generally, the CPU is more efficient, and thus the constrained sampling process 504 cannot just save time, but save precious GPU resources and power, as the GPU is relatively power hungry.

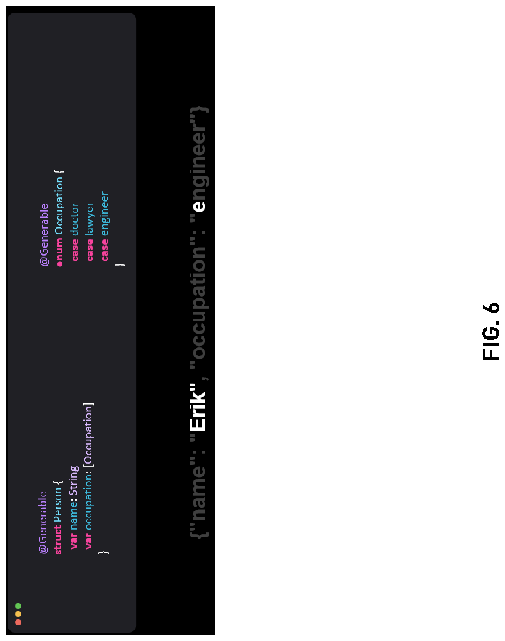

FIG. 6 illustrates an example efficiency in accordance with some embodiments of the present technology. In FIG. 6 the grammar requests the language model to output an occupation in the form of a string. In this case, the occupation of Erik is an engineer so as soon as it is clear that the output will start with an "e" the constrained decoding system 124 can inject the position title "engineer" without waiting for the inference process to eventually sample the same token.

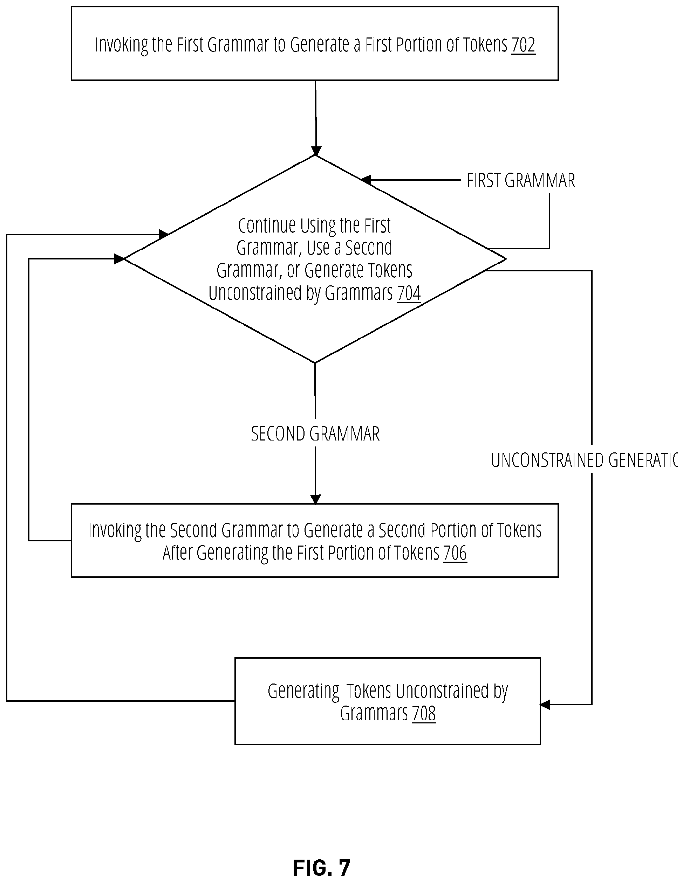

FIG. 7 illustrates an example routine for handling a grammar that has another grammar nested within it in accordance with some embodiments of the present technology. Although the example routine depicts a particular sequence of operations, the sequence may be altered without departing from the scope of the present disclosure. For example, some of the operations depicted may be performed in parallel or in a different sequence that does not materially affect the function of the routine. In other examples, different components of an example device or system that implements the routine may perform functions at substantially the same time or in a specific sequence.

Sometimes, a desired structured output can include a structure nested within a structure. An example would be a JSON code that includes a hashtag defined by a REGEX grammar. In this example, the entire output needs to be compliant with a grammar that defines the JSON code, and the hashtag also needs to be compliant with the REGEX grammar. An instance requiring two grammars to generate a response can occur when a user inputs a dot star (.*) in a REGEX string, where the REGEX string is nested within the JSON code. Although .* is typically permitted to represent any character in REGEX, it cannot represent any character within a JSON string due to JSON's restrictions. Consequently, .* must not be allowed in a REGEX string occurring within the JSON string. Just as with respect to FIG. 2 this can be established by providing the language model instructions that define a second syntax within the first syntax. The first syntax is associated with the first grammar, and the second syntax is associated with a second grammar, and the second grammar is constrained by the first syntax and the second syntax.

According to some examples, the method includes invoking the first grammar to generate a first portion of tokens at block 702. For example, the base language model 122 illustrated in FIG. 1 may invoke the first grammar to generate a first portion of tokens. The language model is trained to determine when it should invoke the constrained decoding system 124 to apply the first grammar, and when it crosses such a decision boundary, the language model can invoke the constrained decoding system 124 to apply the first grammar.

According to some examples, the method includes determining, after generating a first portion of tokens using the first grammar, whether to continue using the first grammar, to use a second grammar, or to continue the generation of tokens unconstrained by grammars at decision block 704. The language model is trained to repeatedly determine whether to invoke a grammar and which grammar it should invoke. In many instances, language model can perform this determination after it generates particular tokens that might be indicative of a transition. This behavior allows the language model to be particularly nimble and switch between grammars.

According to some examples, the method includes invoking the second grammar to generate a second portion of tokens after generating the first portion of tokens at block 706. For example, the base language model 122 illustrated in FIG. 1 may invoke the second grammar to generate a second portion of tokens after generating the first portion of tokens after the determination made at decision block 704.

According to some examples, the method includes generating tokens unconstrained by grammars at block 708. For example, the base language model 122 illustrated in FIG. 1 may generate tokens unconstrained by grammars after the determination made at decision block 704.

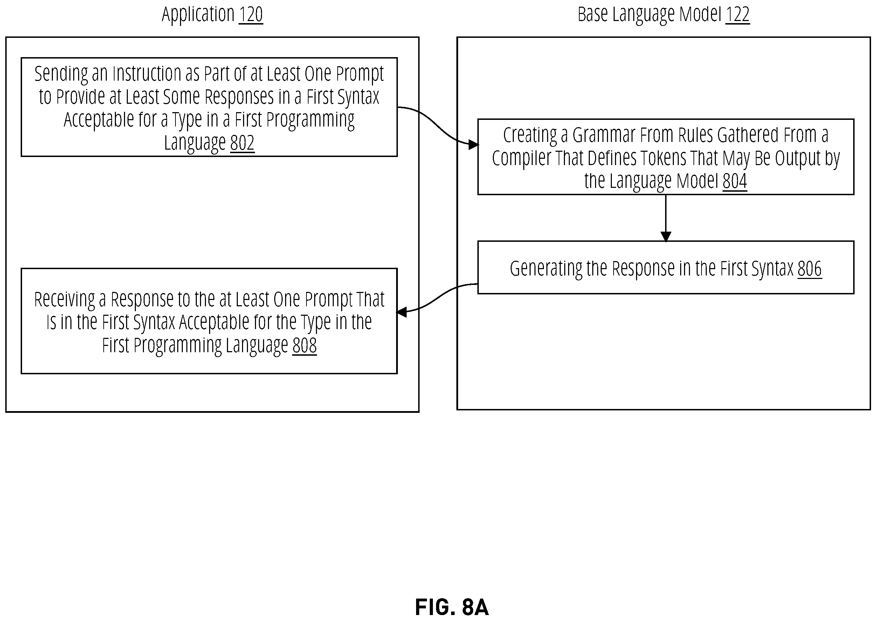

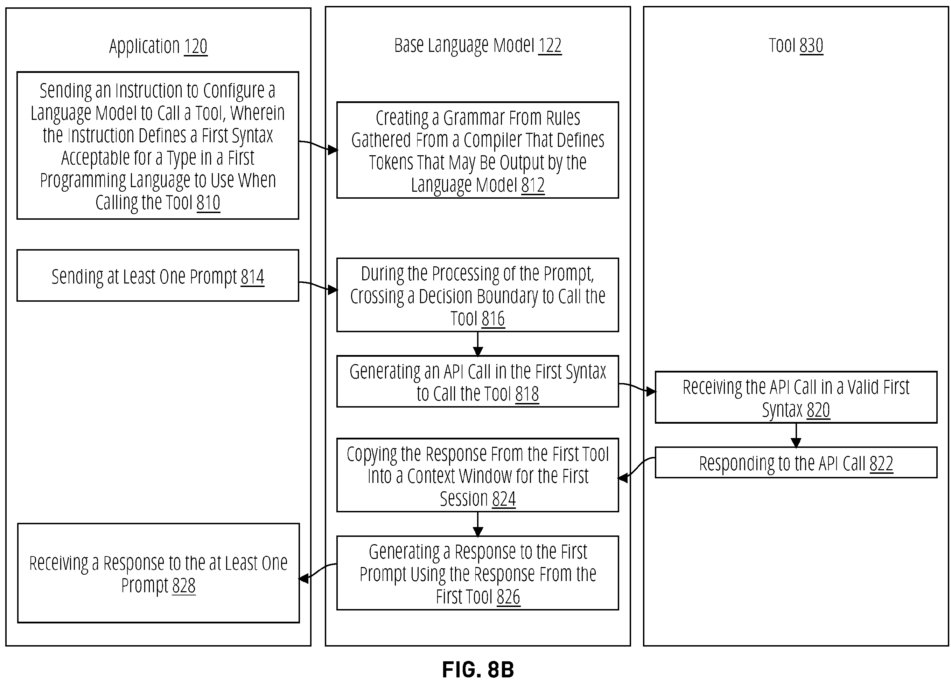

FIG. 8A and FIG. 8B illustrates example sequence diagrams that illustrate instances in which the application would send instructions to the language model to generate outputs that are constrained by a grammar in accordance with some embodiments of the present technology. Although the example routine depicts a particular sequence of operations, the sequence may be altered without departing from the scope of the present disclosure. For example, some of the operations depicted may be performed in parallel or in a different sequence that does not materially affect the function of the routine. In other examples, different components of an example device or system that implements the routine may perform functions at substantially the same time or in a specific sequence.

In FIG. 8A, the at least one prompt can be a request to generate a response where the at least a portion of the response is to be returned using the first syntax. FIG. 8B illustrates at least two additional use cases. First, the application sends the instruction to configure the language model to generate responses in the first syntax before sending a prompt that requires a response in the first syntax. Second, FIG. 8B illustrates an embodiment wherein the language model is configured to call a tool in a communication in the first syntax to aid in generating a response to the prompt.

According to some examples, the method includes sending an instruction as part of at least one prompt to provide at least some responses in a first syntax acceptable for a type in a first programming language at block 802. For example, the application 120 illustrated in FIG. 1 may send an instruction as part of at least one prompt to provide at least some responses in a first syntax acceptable for a type in a first programming language. In this example, the at least one prompt can be a request to generate a response where the at least a portion of the response is to be returned using the first syntax.

According to some examples, the method includes creating a grammar from rules gathered from a compiler that defines tokens that may be output by the language model at block 804. For example, the base language model 122 illustrated in FIG. 1 may create a grammar from rules gathered from a compiler that defines tokens that may be output by the language model. In this example, the base language model 122 may need to invoke the constrained decoding system 124 to create the grammar in order to generate the response. This step would cause extra latency in providing a response.

According to some examples, the method includes generating the response in the first syntax at block 806. For example, the base language model 122 illustrated in FIG. 1 may generate the response in the first syntax. The grammar constrains the language model to output the tokens that are valid within the first syntax.

According to some examples, the method includes receiving a response to the at least one prompt that is in the first syntax acceptable for the type in the first programming language at block 808. For example, the application 120 illustrated in FIG. 1 may receive a response to the at least one prompt that is in the first syntax acceptable for the type in the first programming language.

As introduced above, in FIG. 8B, the method includes sending an instruction to configure a language model to call a tool, wherein the instruction defines a first syntax acceptable for a type in a first programming language to use when calling the tool at block 810. These instructions can be sent in advance of a prompt that might require an inference operation to be performed by the language model. More specifically, the instructions might be sent when initializing a session between the application 120 and the base language model 122, or there might even be some configuration event that can occur when the application 120 is first installed on the client device.

While block 810 addresses configuring the base language model 122 to both generate outputs in syntax and to call a tool, these two use cases do not need to co-exist. It can be possible that the instruction only requests that the base language model 122 provide outputs in a first syntax, just as addressed with respect to FIG. 8A. When the use of the the instruction is to generate responses in the first syntax, the difference between what is illustrated in FIG. 8A and FIG. 8B is just one of timing. In FIG. 8A the instructions come with the prompt, and in FIG. 8B, the instructions configure the base language model 122 before the first prompt.

A tool call is a common use case for configuring the base language model 122 to generate outputs in the first syntax. The tool 830 can be a tool on the client device 102, such as tools/other applications 112 or on the Internet such as external tool 114. Tools 830 are generally accessible via APIs that are defined by a particular syntax. Accordingly, one use for configuring the base language model 122 to output responses in the first syntax is to make it possible for the base language model 122 to call the tool 830 reliably using the first syntax.

According to some examples, the method includes creating a grammar from rules gathered from a compiler that defines tokens that may be output by the language model at block 812. This step is similar to block 804 illustrated in FIG. 8A.

According to some examples, the method includes sending at least one prompt at block 814. In FIG. 8B, the prompt comes after the base language model 122 has been configured to generate responses in the first syntax and/or to be able to call tool 830. While the configuration only needs to occur once per session, many prompts can be sent to take advantage of the configuration.

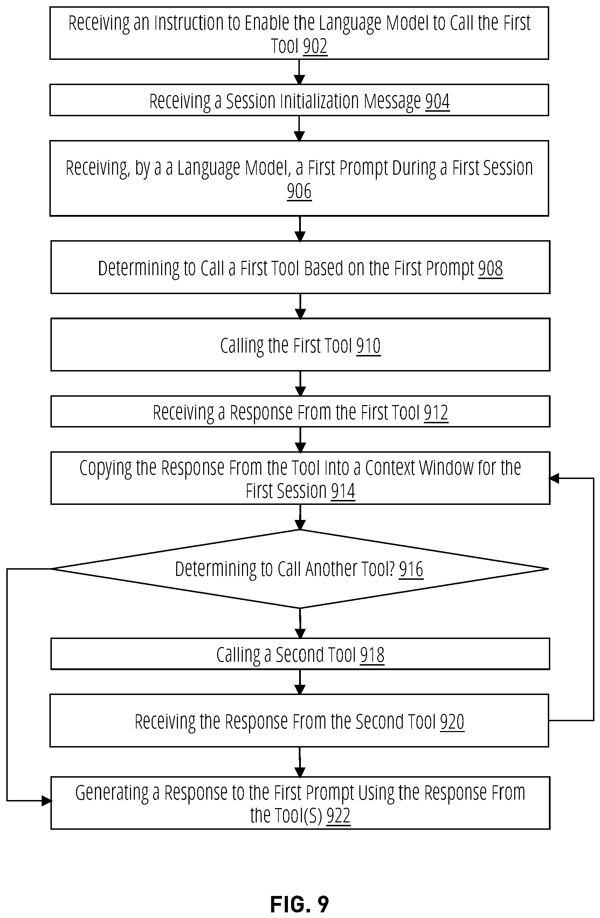

According to some examples, the method includes crossing a decision boundary to call the tool at block 816. For example, base language model 122 can cross a decision boundary and determine to call the tool in response to at least one prompt. The base language model 122 is trained to make decisions to call tools based on configuration information (addressed further with respect to FIG. 9) for the tools. When the base language model 122 determines that it should call the tool to facilitate responding to the prompt, the base language model 122 will need to generate an API call in the first syntax to call the tool at block 818. For example, the base language model 122 can generate the API call assisted by the constrained decoding system 124 to ensure that the output tokens are valid within the first syntax of the API call.

The base language model 122 can then make the API call to the tool 830.

According to some examples, the method includes receiving the API call in a valid first syntax at block 820. For example, the tool 830 illustrated in FIG. 8B may receive the API call in a valid first syntax. In some embodiments, tool 830 is a tool provided by a 3rd party (a party other than the operating system or language model publisher).

According to some examples, the method includes responding to the API call at block 822. For example, the tool 830 illustrated in FIG. 8B may respond to the API call.

According to some examples, the method includes copying the response from the first tool into a context window for the first session at block 824. For example, the base language model 122 illustrated in FIG. 1 may copy the response from the first tool into a context window for the first session. This is a key improvement over existing technologies wherein language models are not generally able to interact directly with 3rd party tools.

According to some examples, the method includes generating a response to the first prompt using the response from the first tool at block 826. For example, the base language model 122 illustrated in FIG. 1 may generate a response to the first prompt using the response from the first tool. After block 824, the context window includes the first prompt and the response from the first tool, and base language model 122 generates the response based on the current contents of the context window. In some embodiments, as will be addressed further with respect to FIG. 9, the base language model 122 might choose to call another tool.

Once the base language model 122 has finished generating a response to the at least one prompt, the base language model 122 can send the response to the application 120. As addressed above, in some instances the at least one prompt may have specified a first syntax in which the base language model 122 is to provide its response and the response can be formatted in the first syntax.

According to some examples, the method includes receiving a response to the at least one prompt at block 828. For example, the application 120 illustrated in FIG. 1 may receive a response to the at least one prompt.

FIG. 9 illustrates an example routine for calling one or more tools by a language model in accordance with some embodiments of the present technology. Although the example routine depicts a particular sequence of operations, the sequence may be altered without departing from the scope of the present disclosure. For example, some of the operations depicted may be performed in parallel or in a different sequence that does not materially affect the function of the routine. In other examples, different components of an example device or system that implements the routine may perform functions at substantially the same time or in a specific sequence.

According to some examples, the method includes receiving an instruction to enable the language model to call the first tool at block 902. For example, the base language model 122 illustrated in FIG. 1 may receive an instruction to enable the language model to call the first tool. The instruction includes a description of when the language model should call the first tool. In some embodiments, the instruction can also enable the language model to call additional tools.

In some embodiments, the tools are supported by a software development kit of a device operating system. In other words, a software development kit (SDK) might define how the tools should be called. Additionally, the tools might be configured to take advantage of services provided by the operating system, as required by the SDK. As an example, if the tool wants to access user data, the tool needs permission from the operating system, which might require that a user explicitly provide permission for the tool to access such data.

An example of an instruction to enable the language model to call the first tool can be:

```
      @Tool(description: "Use this tool to look up contact information")
      struct ContactsTool {
       func invoke(name: String) async throws -> ToolOutput {
      }
```

This defines a SWIFT struct, ContactsTool, with a function, invoke, that takes a name as a parameter. The @Tool attribute provides a description, indicating this tool is used to look up contact information.

According to some examples, the method includes receiving a session initialization message at block 904. For example, the base language model 122 illustrated in FIG. 1 may receive a session initialization message. The session initialization message includes a set of tools that includes at least the first tool. The session initialization message enables the language model to call any of the set of tools during the session. An example session initialization message can be:
let session = LanguageModelsSession(tools: [ContactsTool()])
let answer = try await session.respond(to: "What is mom's number")

This creates a session with a list of tools, including ContactsTool (the only tool in the list in this example).

According to some examples, the method includes receiving a first prompt during a first session at block 906. For example, the base language model 122 illustrated in FIG. 1 may receive a first prompt during a first session. An example of the first prompt might be:
What is my mom's phone number?

According to some examples, the method includes determining to call a first tool based on the first prompt at block 908. For example, the base language model 122 illustrated in FIG. 1 may determine to call a first tool based on the first prompt. When the language model is configured to call multiple tools, the first tool is one of the multiple tools. Determining by the language model which tool of the multiple tools to call in furtherance of responding to the first prompt. For example, the language model might output (in JSON):

```
      Available tools:
       {"name": "contacts_tool", "description": "Use this tool to look up contact
 information", "parameters": {"name": "string"}}
      """
      """
      <start_executable>‴function
      [{"name": "contacts_tool", "arguments": {"name": "Mom"}} ]<end_executable>
      """
```

This JSON object describes the contacts_tool, including its name, description, and expected parameters and represents a JSON call to the contacts_tool with the argument name set to "Mom."

According to some examples, the method includes calling the first tool at block 910. For example, the base language model 122 illustrated in FIG. 1 may call the first tool. The call of the first tool and the response from the first tool is subject to a service provided by the device operating system associated with the device on which the language model is executing, and that exposes an integration with the first tool.

In the present example, the call of the first tool is through an API provided by a device operating system, and therefore the API call needs to be translated from JSON into SWIFT since the iOS operating system uses SWIFT for API calls. The IOS operating system has a tool called GENERABLE that can do this translation. As such the language model might interface with GENERABLE to perform the translation. After the translation, the call from the base language model 122 can be:
contactsTool.invoke(name: "Mom") --> Mom's contact information

This calls the invoke function on contactsTool with "Mom" as the argument, aiming to retrieve Mom's contact information.

As addressed herein, the first tool does not need to be available through the operating system. The session initialization message could have configured the base language model 122 to call an API over the Internet, which might have required an API call in JSON. In which case, base language model 122 could have output and sent an API call in JSON syntax.

According to some examples, the method includes receiving a response from the first tool at block 912. For example, the base language model 122 illustrated in FIG. 1 may receive a response from the first tool.

According to some examples, the method includes copying the response from the tool into a context window for the first session at block 914. For example, the base language model 122 illustrated in FIG. 1 may copy the response from the tool into a context window for the first session. The context window now includes the first prompt and the response from the first tool.

According to some examples, the method includes determining to call another tool at decision block 916. For example, the base language model 122 illustrated in FIG. 1 may determine to call another tool. While the above example did not include another tool in the session initialization message, it could have. The base language model 122 could have been configured to call several tools. Such configuration could occur through one or more messages.

Additionally, the language model might be given knowledge of all tools existing on the computing device or all tools made available through the operating system. For example, tools might register with the operating system, which can be a knowledge source for the language model to determine what tools are available to be called and what syntax is required to call them. Through such a mechanism, it might not be necessary to explicitly give the language model access to the set of tools in a session initialization message; instead, the language model might naturally be able to discover tools through the operating system so that the language model can determine whether and when to call such tools.

When the base language model 122 does not determine to call another tool, the method continues to block 922.

According to some examples, when the language model determines to call the second tool, the method includes calling the second tool at block 918. The language model is trained to determine which tools to call and when based on the configurations provided to it. The model does not need to be provided with a particular sequence in which to call the tools.

In some embodiments, the calling the second tool can include sending information based on the response from the first tool to the second tool. It might be that the base language model 122 determines that the tools to which it has access should be called in series so that it can gather information from a response from the first tool and send at least some of it to the second tool, or third tool. While FIG. 9 shows the base language model 122 calling the second tool in series, after calling the first tool, the base language model 122 could decide to call multiple tools at the same time, in parallel.

According to some examples, the method includes receiving the response from the second tool at block 920. For example, the base language model 122 illustrated in FIG. 1 may receive the response from the second tool. When the base language model 122 receives a response from a second (or third, etc.) tool, the context window can be updated to include the first prompt, the response from the first tool, and the response from the second tool.

According to some examples, the method includes generating a response to the first prompt using the response from the tool(s) at block 922. For example, the base language model 122 illustrated in FIG. 1 may generate a response to the first prompt using the response from the tool(s).

In addition to the constrained decoding embodiments addressed above, the present technology also provides benefits to 3rd party app developers by supporting fine-tuned models and customized distilled model that can be bundled with their apps to provide better support of their apps. More specifically, a fine-tuned model can provide somewhat better or more reliable responses to prompts in a particular domain associated with a given training set. And a distilled model can provide faster responses because the distilled model is often smaller in size (less parameters) and more focused to perform well in responding to prompts coming from the specific app.

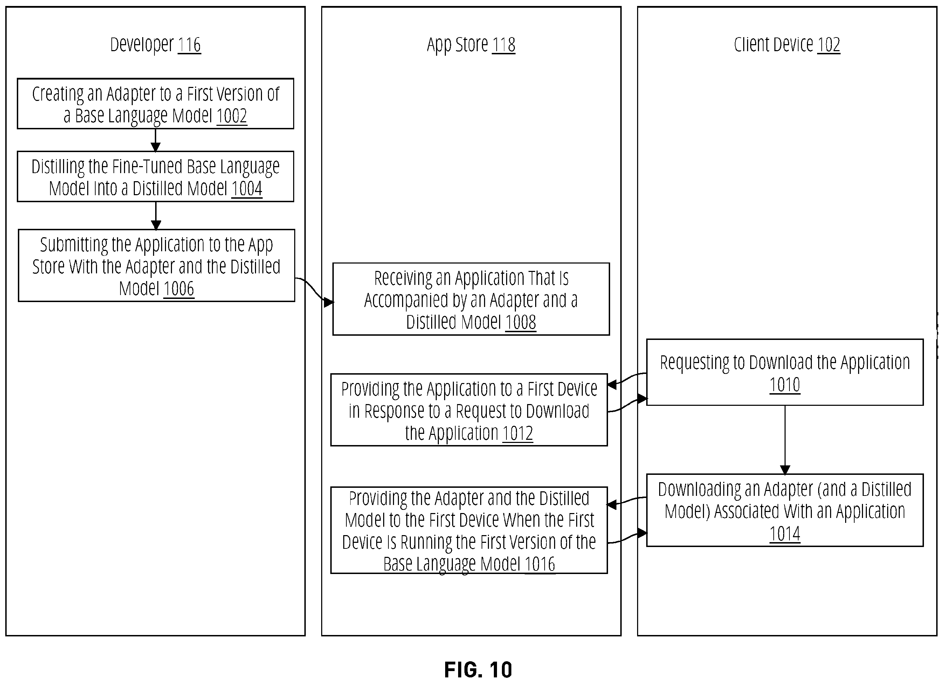

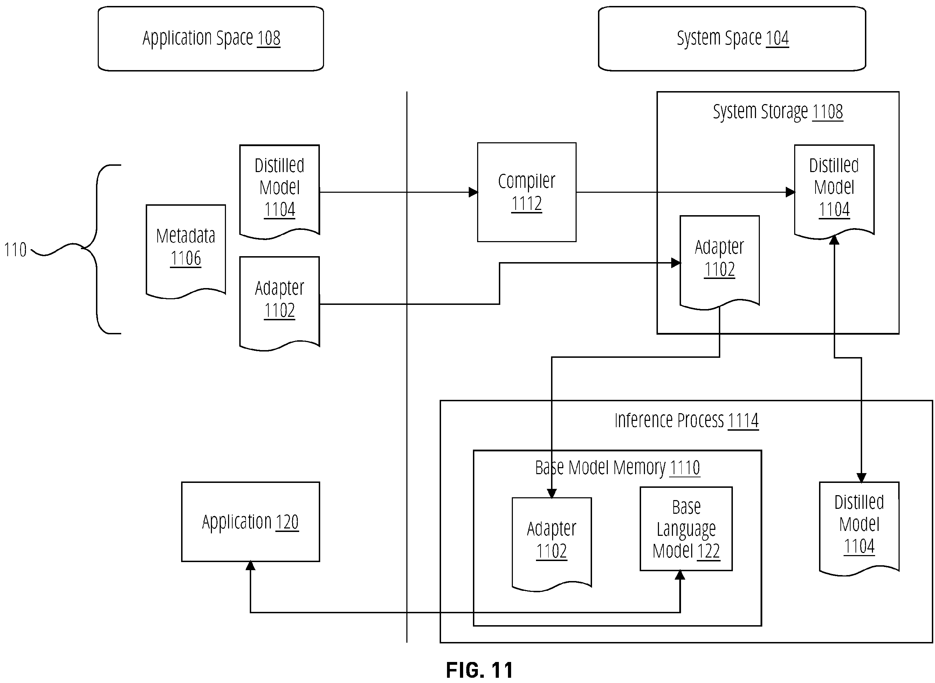

As will be addressed herein, supporting fine-tuned models and distilled models within apps, especially apps that are to be run on a personal computing device with an on-device language model is not trivial. The app developer needs to be able to fine-tune a language model that is on users' personal computing devices, and as operating system updates occur, so too might the version of the language model. This creates a challenge for all of the app developer, the App store, and the client device. All three entities need to manage new assets (the adapter to fine-tuned the base language model and distilled model). Some of these challenges will be addressed with respect to FIG. 10 and FIG. 11.

FIG. 10 illustrates an example routine for creating a fine-tuned model and distilled model, and managing these assets by an app store and client device in accordance with some embodiments of the present technology. Although the example routine depicts a particular sequence of operations, the sequence may be altered without departing from the scope of the present disclosure. For example, some of the operations depicted may be performed in parallel or in a different sequence that does not materially affect the function of the routine. In other examples, different components of an example device or system that implements the routine may perform functions at substantially the same time or in a specific sequence.

According to some examples, the method includes creating an adapter to a first version of a base language model at block 1002. For example, as part of a process of developing an application to be offered for download through an app store, the developer 116 illustrated in FIG. 1 may create an adapter to a first version of a base language model. When the adapter is used with the first version of the base language model the base language model is a fine-tuned base language model for providing responses to queries that originate from the application.

An adapter is a layer of customized weights that interface with the weights on the base language model. The combined weights of the adapter and the base language model yield different weights than the base language model alone and, therefore, result in a fine-tuned base language model. One common type of adapter is a LoRA (Low-Rank Adaptation) adapter, which involves fine-tuning by adding trainable rank decomposition matrices to certain layers of the base language model. This method significantly reduces the number of parameters needed for training, thereby decreasing computational requirements and enabling the adaptation of large base language models to specific tasks or domains with limited data or resources. In the present case, the LoRA adapter does not change the weights of the base language model, which are fixed at training time, and instead, the weights associated with the LoRA adapter adjust to refine the performance of the combination of the base language model and LoRA adapter to be fine-tuned for a particular purpose.

Since the base language model executes on the client device, the present technology provides app developers with a fine-tuning tool kit (as part of an App Developer tool kit that facilitates the development of Apps made to run in a particular environment (e.g., iOS)) that allows a developer to download a version of the base language model onto their client device and connect the client device to the training environment (an application on a powerful computing device or in a cloud) via a connection to the client device (which might be a smartphone, tablet, headset, consumer level laptop, etc.). In this way, the app developer can create their adapter and test the performance of their app with the base language model running in its native environment.

According to some examples, the method includes distilling the fine-tuned base language model into a distilled model at block 1004. For example, the developer 116 illustrated in FIG. 1 may distill the fine-tuned base language model into a distilled model.

As introduced above, a distilled model can provide some of the benefits of a fine-tuned base language model, but is much smaller and more efficient, which can result in faster response times during inference operations and less power consumption. A distilled model is a simplified version of a larger, more complex machine learning model, created using a process known as "model distillation." This process involves training a smaller distilled model (often referred to as the "student") to mimic the behavior of a larger, pretrained fine-tuned base language model (the "teacher"). The goal is to retain as much accuracy and performance of the original model as possible while reducing its size and computational requirements. This is particularly useful for deploying models in environments with limited resources, such as mobile devices or embedded systems.

In some embodiments, just as with the fine-tuning tool kit, developers can be provided with tools to aid in creating the distilled model. In some examples, the tools might be able to automatically generate the distilled model from a collection of sample prompts that the app is likely to pass to the distilled model.

According to some examples, the method includes submitting the application to the app store with the adapter and the distilled model at block 1006. For example, the developer 116 illustrated in FIG. 1 may submit the application to the app store with the adapter and the distilled model. The adapter and distilled model are provided in a distinct container from the application. In some examples, the developer also includes a metadata file that defines the compatibility of the adapter with the first version of the base language model. Note that it is not required that an app includes an adapter or distilled model to take advantage of the on-device language model. An adapter or distilled model is only needed if the app developer desires to gain the benefits of a fine-tuned base language model. Even if the app developer wishes to gain the benefits of a fine-tuned base language model, the app developer does not need to include a distilled model; it is sufficient to only include an adapter, but the app developer would not gain the additional benefits from using a distilled model.

According to some examples, the method includes receiving an application that is accompanied by an adapter and a distilled model 1008. For example, the app store 118 illustrated in FIG. 1 may receive the application that is accompanied by the adapter and the distilled model.

Once the app is hosted in the app store it can be made available to download by a client device. According to some examples, the method includes requesting to download the application at block 1010. For example, the client device 102 illustrated in FIG. 1 may request to download the application.

According to some examples, the method includes providing the application to a first device in response to the request to download the application at block 1012. For example, the app store 118 illustrated in FIG. 1 may provide the application to the first device in response to the request to download the application. In some embodiments, the app store 118 only initially serves the application to the client device 102, and does not immediately provide the container including the adapter and/or distilled model - though the container could be provided at the time of app download. Not providing the container with the app download can be a benefit of storing these components of the application in the separate container. More specifically, many apps will have functions that do not require the use of the on-device language model, and so it might be wasteful to download the container before the user attempts to use the on-device language model through the app. Additionally, versions of the on-device language model and the adapter might change over time, and it can be wasteful to proactively download versions of the adapter or distilled model that might not be used.

According to some examples, the method includes downloading an adapter and/or a distilled model associated with an application at block 1014. For example, the client device 102 illustrated in FIG. 1 may download the container (adapter files 110) including the adapter and/or the distilled model associated with an application.

Before downloading the adapter, the app store 118 can check which version of the base language model that the client device 102 is running. Since the adapter is specific to the particular base language model, the app store 118 might store multiple versions of the adapter for the application. The app store can determine that the adapter is suited for a particular base language model using the metadata file that was provided in the container with the adapter.

According to some examples, the method includes providing the adapter and the distilled model to the first device when the first device is running the first version of the base language model at block 1016. For example, the app store 118 illustrated in FIG. 1 may provide the adapter that is configured for the first version of the base language model and the distilled model to the first device when the first device is running the first version of the base language model.

FIG. 11 illustrates the adapter and the distilled model residing in an application space 108, and being copied into a system space 104 for the inference process in accordance with some embodiments of the present technology.

Once the adapter and/or distilled model has been downloaded from the app store as addressed with respect to FIG. 10, these files reside in an application space 108 of the operating system. However, the on-device language model (base language model 122) resides in a system space 104 of the operating system. The application space 108 is a sandboxed environment for the app and its files, and the system space 104 is a privileged space for trusted system processes. A process running in system space 104 cannot directly access files in the application space 108 and vice versa. Therefore, in order to make use of the adapter and/or distilled model these files need to be copied into the system space 104.

FIG. 11 shows the adapter files 110 after having been downloaded from the app store 118. The adapter files 110 include metadata 1106, the adapter 1102, and distilled model 1104. The metadata 1106 describes the adapter files and which version of the base language model they are compatible with. The adapter 1102 is a collection of weights, and in some embodiments is a LoRA adapter. The distilled model 1104 is generally two files. One small file constitutes the model, and another file is the weights of the distilled model. As introduced above, the distilled model is not required (therefore, any further reference to the distilled model assumes that it exists).

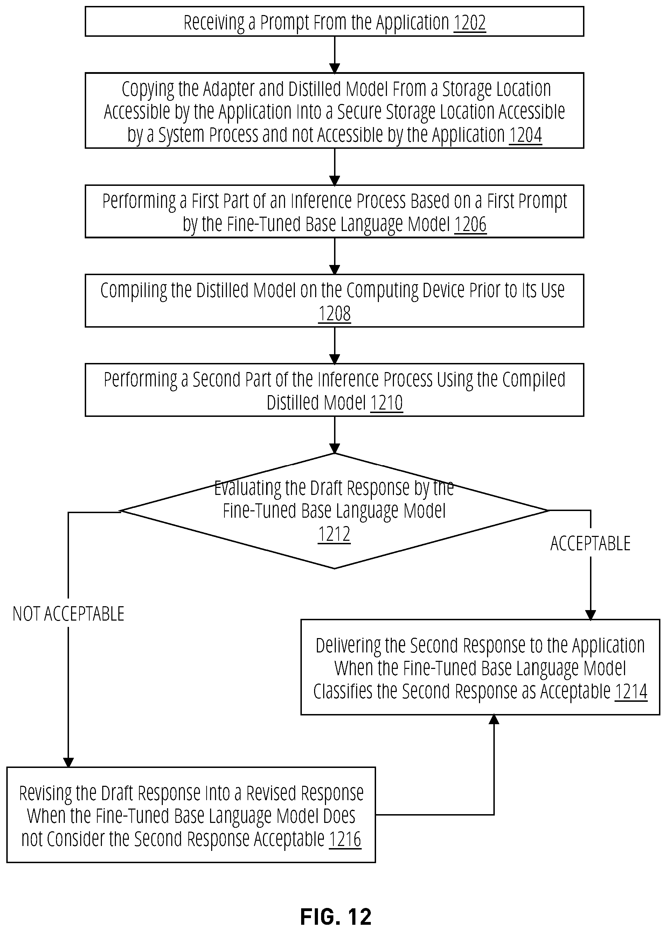

A system process called a model manager (not shown) can be responsible for copying the adapter 1102 into system storage 1108 and for copying the distilled model 1104 into a compiler 1112, which compiles the distilled model 1104 before storing the compiled distilled model 1104 into system storage 1108. In some embodiments, the model manager can copy these files on demand, when they are required by the interference process. More specifically, the distilled model 1104 and adapter 1102 remain in application space without being copied into system storage 1108 until application 120 initializes base language model 122. FIG. 12 begins at this step in the process and so further description of FIG. 11 will be in the context of FIG. 12.

FIG. 12 illustrates an example routine for using the adapter and distilled model in an inference process in accordance with some embodiments of the present technology. Although the example routine depicts a particular sequence of operations, the sequence may be altered without departing from the scope of the present disclosure. For example, some of the operations depicted may be performed in parallel or in a different sequence that does not materially affect the function of the routine. In other examples, different components of an example device or system that implements the routine may perform functions at substantially the same time or in a specific sequence.

According to some examples, the method includes receiving a prompt from the application at block 1202. For example, the base language model 122 illustrated in FIG. 1 may receive a prompt from the application.

As introduced above, now that the base language model 122 has received a prompt that will require the use of the adapter 1102 and distilled model 1104, if present, the method includes copying, by the model manager, the adapter 1102 and distilled model 1104 from a storage location accessible by the application into a secure storage location 1108 accessible by a system process and not accessible by the application at block 1204.

More specifically, the adapter 1102 is directly copied into the system storage 1108 and is immediately ready to be copied by the model manager into the base model memory 1110 to be used in the inference process 1114 with the base language model. However, the distilled model 1104 is being distilled when the inference process begins.

According to some examples, the method includes performing a first part of an inference process based on a first prompt by the fine-tuned base language model at block 1206. For example, the fine-tuned base language model may perform a first part of an inference process based on a first prompt by the fine-tuned base language model. For clarity, the fine-tuned base language model is the combination of the base language model 122 with adapter 1102.

According to some examples, the method includes compiling the distilled model on the computing device prior to its use at block 1208. This compiling is performed at least partially contemporaneous with the first part of the inference process. Once the distilled model is compiled, the compiled distilled model can be loaded into a GPU memory and is ready for use in the inference process 1114.

According to some examples, the method includes performing a second part of the inference process using the compiled distilled model at block 1210. The compiled distilled model can output a draft response as a result of the second part of the inference process.

According to some examples, the method includes evaluating the draft response by the fine-tuned base language model at decision block 1212. For example, the base language model 122 illustrated in FIG. 1 may evaluate the draft response by the fine-tuned base language model. This technique of having the distilled model 1104 perform inference operations when it is available takes advantage of the efficiencies of the distilled model. Then, the fine-tuned base language model can check the answers provided by the distilled model. Even though the fine-tuned base language model requires more computing resources to run, it runs much faster when evaluating output from the distilled model than it would to generate the tokens from scratch, so most of the efficiency gain from using the distilled model for the inference process is maintained.

The reason to have the fine-tuned base language model check the draft response is that the distilled model might have been created without a significant amount of training. At a minimum, the use of the fine-tuned base language model in this way can also give confidence in the distilled model. It might be possible to discontinue checking the output of the distilled model using the fine-tuned base language model after the distilled model generates enough draft responses without requiring correction. This technique of having the output of the distilled model checked by the fine-tuned base language model is called speculative decoding.

According to some examples, the method includes delivering the second response to the application when the fine-tuned base language model classifies the second response as acceptable at block 1214.

According to some examples, the method includes revising the draft response into a revised response when the fine-tuned base language model does not consider the second response acceptable at block 1216.

In some embodiments, and subject to user consent to use their data in this way, it can be possible to store prompts and responses from the distilled model and the final response delivered back to the application 120 in response to the prompt. This data could be used to further train the distilled model into a better distilled model, and perhaps a distilled model that is specific to the types of prompts that the user account provides via application 120.

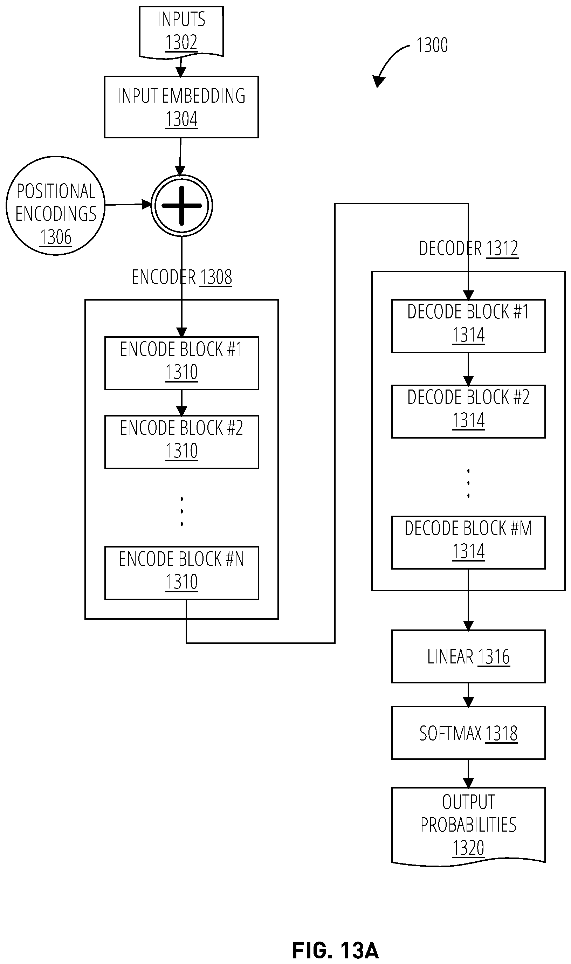

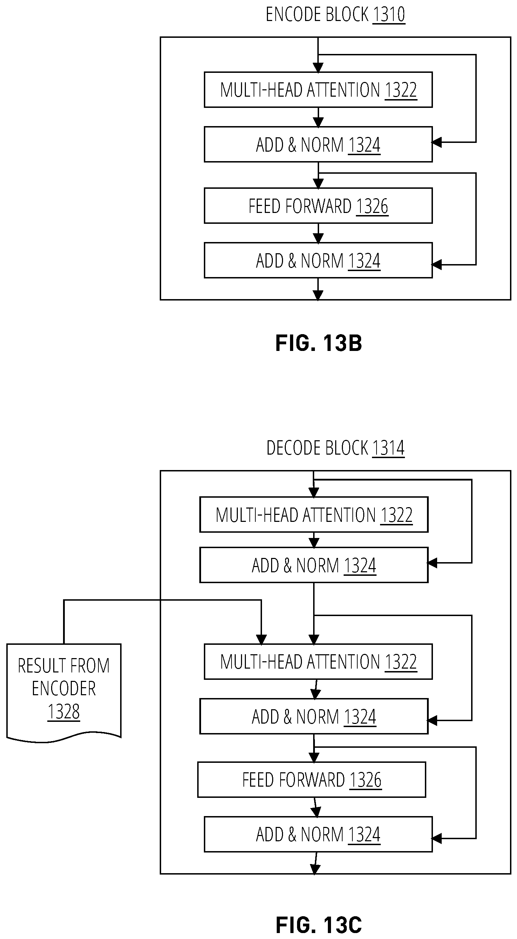

FIG. 13A, FIG. 13B, and FIG. 13C illustrates an example transformer architecture in accordance with some embodiments of the present technology. Examples of ML models that use a transformer neural network (e.g., transformer architecture 1300) can include, e.g., generative pretrained transformer (GPT) models and Bidirectional Encoder Representations from Transformer (BERT) models. The transformer architecture 1300, which is illustrated in FIG. 13A, FIG. 13B, and FIG. 13C, includes inputs 1302, input embedding block 1304, positional encodings 1306, encoder 1308 including encode blocks 1310, decoder 1312 including decode blocks 1314, linear block 1316, softmax block 1318, and output probabilities 1320.

Input embedding block 1304 is used to provide representations for words. For example, embedding can be used in text analysis. According to certain non-limiting examples, the representation is a real-valued vector that encodes the meaning of the word in such a way that words that are closer in the vector space are expected to be similar in meaning. Word embeddings can be obtained using language modeling and feature learning techniques, where words or phrases from the vocabulary are mapped to vectors of real numbers. According to certain non-limiting examples, the input embedding block 1304 can be learned embeddings to convert the input tokens and output tokens to vectors of dimension that have the same dimension as the positional encodings, for example.

Positional encodings 1306 provide information about the relative or absolute position of the tokens in the sequence. According to certain non-limiting examples, positional encodings 1306 can be provided by adding positional encodings to the input embeddings at the inputs to the encoder 1308 and decoder 1312. The positional encodings have the same dimension as the embeddings, thereby enabling a summing of the embeddings with the positional encodings. There are several ways to realize the positional encodings, including learned and fixed. For example, sine and cosine functions having different frequencies can be used. That is, each dimension of the positional encoding corresponds to a sinusoid. Other techniques of conveying positional information can also be used, as would be understood by a person of ordinary skill in the art. For example, learned positional embeddings can instead be used to obtain similar results. An advantage of using sinusoidal positional encodings rather than learned positional encodings is that doing so allows the model to extrapolate to sequence lengths longer than the ones encountered during training.

Encoder 1308 can use stacked self-attention and point-wise, fully connected layers. Encoder 1308 can be a stack of N identical layers (e.g., N = 6), and each layer can be an encode block, as illustrated by encode block 1310 shown in FIG. 13B. Each encode block 1310 has two sub-layers: (i) a first sub-layer has a multi-head attention block 1322 and (ii) a second sub-layer has a feed forward block 1326, which can be a position-wise fully connected feed-forward network. The feed forward block 1326 can use a rectified linear unit (ReLU).

Encoder 1308 uses a residual connection around each of the two sub-layers, followed by an add & norm block 1324, which performs normalization. For example, the output of each sub-layer can be LayerNorm(x+ Sublayer(x)). To facilitate these residual connections, all sub-layers in the model, as well as the embedding layers, produce output data having a same dimension.

Similar to encoder 1308, decoder 1312 uses stacked self-attention and point-wise, fully connected layers. Decoder 1312 can also be a stack of M identical layers (e.g., M = 6), and each layer can be a decode block, as illustrated by decode block 1312 shown in FIG. 13B. In addition to the two sub-layers (i.e., the sublayer with multi-head attention block 1322 and the sub-layer with feed forward block 1326) found in encode block 1310, decode block 1314 can include a third sub-layer, which performs multi-head attention over the output of the encoder stack. Similar to encoder 1308, decoder 1312 uses residual connections around each of the sub-layers, followed by layer normalization. Additionally, the sub-layer with multi-head attention block 1322 can be modified in the decoder stack to prevent positions from attending to subsequent positions. This masking, combined with the fact that the output embeddings are offset by one position, can ensure that the predictions for position i can depend only on the known output data at positions less than i.

Linear block 1316 can be a learned linear transformation. For example, when transformer architecture 1300 is being used to translate from a first language into a second language, linear block 1316 can project the output from the last decode softmax block 1318 into word scores for the second language (e.g., a score value for each unique word in the target vocabulary) at each position in the sentence. For instance, if the output sentence has seven words and the provided vocabulary for the second language has 10,000 unique words, then 10,000 score values are generated for each of those seven words. The score values indicate the likelihood of occurrence for each word in the vocabulary in that position of the sentence.

Softmax block 1318 then turns the scores from linear block 1316 into output probabilities 1320 (which add up to 1.0). In each position, the index provides for the word with the highest probability, and then maps that index to the corresponding word in the vocabulary. Those words then form the output sequence of transformer architecture 1300. The softmax operation is applied to the output from linear block 1316 to convert the raw numbers into output probabilities 1320 (e.g., token probabilities).

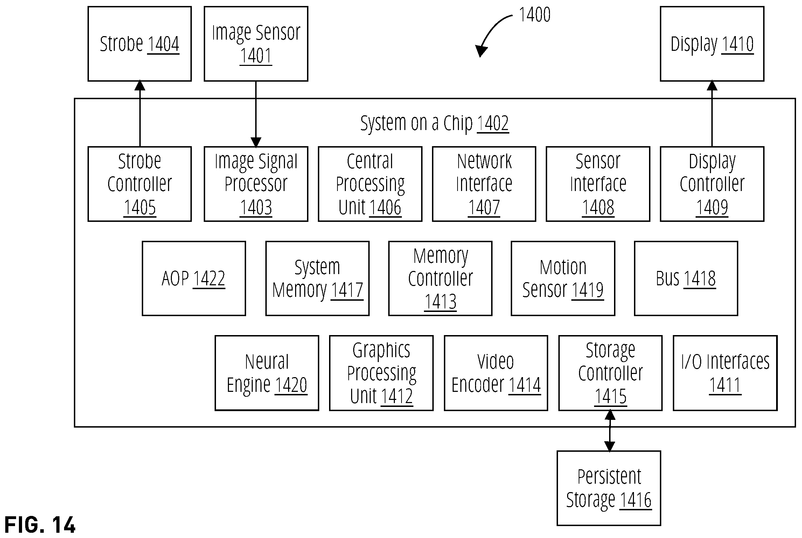

FIG. 14 is a system diagram illustrating device 1400 in accordance with some embodiments of the present technology. Although the example system depicts particular system components and an arrangement of such components, this depiction is to facilitate a discussion of the present technology and should not be considered limiting unless specified in the appended claims. For example, some components that are illustrated as separate can be combined with other components, some components can be divided into separate components, some components might not be present or needed, and additional components may be present.

Device 1400 may perform various operations including image processing. For this and other purposes, the device 1400 may include, among other components, image sensor 1401, system-on-a system on a chip 1402, system memory 1417, persistent storage 1416, motion sensor 1419, and display 1410.

Image sensor 1401 is a component for capturing image data and may be embodied, For example, as a complementary metal-oxide-semiconductor (CMOS) active-pixel sensor) a camera, video camera, or other devices. Image sensor 1401 generates raw image data that is sent to system on a chip 1402 for further processing. In some embodiments, the image data processed by system on a chip 1402 is displayed on display 1410, stored in system memory 1417, persistent storage 1416 or sent to a remote computing device via network connection. The raw image data generated by image sensor 1401 may be in a Bayer color filter array (CFA) pattern (hereinafter also referred to as "Bayer pattern").

Strobe controller 1405 is a component for controlling variable features of strobe 1404. Some attributes of the strobe 1404 profile that can be adjusted include a strobe duration, a strobe strength, strobe spectrum, and an angular profile. For example, some strobe 1404 devices can include strobes with adjustable intensities, and some strobe devices include multiple strobes, maybe with different emission spectra that can be activated independently to control an angular profile or spectrum of the light emitted from the strobe. An angular profile refers to the pattern and spread of light emitted from the strobe unit as it disperses over an area, as well as how this dispersion changes at different angles relative to the strobe. This can include how the intensity and distribution of light vary as one moves away from the central axis of the strobe, which is directly in front of it, towards the sides.

Motion sensor 1419 is a component or a set of components for sensing motion of device 1400. Motion sensor 1419 may generate sensor signals indicative of orientation and/or acceleration of device 1400. The sensor signals are sent to system on a chip 1402 for various operations such rotating images displayed on display 1410, and tracking motion of the image sensor 1401 during image capture.

Display 1410 is a component for displaying images as generated by system on a chip 1402. Display 1410 may include, For example, liquid crystal display (LCD) device or an organic light emitting diode (OLED) device. Based on data received from system on a chip 1402, display 1410 may display various images, such as menus, selected operating parameters, images captured by image sensor 1401 and processed by system on a chip 1402, and/or other information received from a user interface of device 1400 (not shown).

System memory 1417 is a component for storing instructions for execution by system on a chip 1402 and for storing data processed by system on a chip 1402. System memory 1417 may be embodied as any type of memory including, For example, dynamic random access memory (DRAM), synchronous DRAM (SDRAM), double data rate (DDR, DDR2, DDR3, etc.) RAMBUS DRAM (RDRAM), static RAM (SRAM) or a combination thereof. In some embodiments, system memory 1417 may store pixel data or other image data or statistics in various formats. System memory 1417 can be accessible by many of the components of the system on a chip 1402, including, but not limited to the central processing unit 1406, graphics processing unit 1412, and neural engine 1420.

Persistent storage 1416 is a component for storing data in a non-volatile manner. Persistent storage 1416 retains data even when power is not available. Persistent storage 1416 may be embodied as read-only memory (ROM), NAND or NOR strobe memory or other non-volatile random access memory devices.

System on a chip 1402 is embodied as one or more integrated circuit (IC) chips and performs various data processing processes. System on a chip 1402 may include, among other components, Image Signal Processor 1403, one or more central processing unit 1406, network interface 1407, sensor interface 1408, display controller 1409, one or more graphics processing unit 1412, memory controller 1413, video encoder 1414, storage controller 1415, one or more neural engine 1420 and various other input/output (I/O) I/O interfaces 1411, and bus 1418. Some components of system on a chip 1402 can be connected directly to system memory 1417, while other components are connected to other components by bus 1418. System on a chip 1402 may include more or fewer components than those shown in FIG. 14.

Image Signal Processor 1403 (ISP) is hardware that performs various stages of an image processing pipeline. In some embodiments, Image Signal Processor 1403 may receive raw image data from image sensor 1401, and process the raw image data into a form that is usable by other subcomponents of system on a chip 1402 or components of device 1400. Image Signal Processor 1403 may perform various image-manipulation operations such as image translation operations, horizontal and vertical scaling, color space conversion and/or image stabilization transformations, as described below in detail with reference to FIG. 2.

Central processing unit 1406 (CPU) may be embodied using any suitable instruction set architecture, and may be configured to execute instructions defined in that instruction set architecture. Central processing unit 1406 may be general-purpose or embedded processors using any of a variety of instruction set architectures (ISAs), such as the x86, PowerPC, SPARC, RISC, ARM or MIPS ISAs, or any other suitable ISA. Although a single CPU is illustrated in FIG. 14, system on a chip 1402 may include multiple CPUs. In multiprocessor systems, each of the CPUs may commonly, but not necessarily, implement the same ISA.

Graphics processing unit 1412 (GPU) is graphics processing circuitry for performing graphical data. For example, GPU may render objects to be displayed into a Frame buffer (e.g., one that includes pixel data for an entire Frame). Graphics processing unit 1412 may include one or more graphics processors that may execute graphics software to perform a part or all of the graphics operation, or hardware acceleration of certain graphics operations.

The Always on Processor (AOP) 1422 serves as a component in devices, enabling the execution of a real-time operating system, even when the central processing unit 1406 is powered off or in sleep mode. Functioning as a distinct and energy-efficient processor, the AOP operates autonomously from the central processing unit 1406, ensuring that specific functionalities remain accessible even in a "powered off" state. Tasked with managing various sensors and chips within the device, including the motion sensor, Bluetooth, and the ultra-wideband chip, the AOP facilitates seamless connectivity and operation. It possesses the capability to awaken the central processing unit 1406 as required, effectively conserving battery life. The AOP 1422 is empowered to execute critical tasks independently, ensuring uninterrupted functionality.

Neural engine 1420 includes one or more processing cores optimized for machine learning tasks including training and inference tasks. Neural engine 1420 enables rapid processing of artificial intelligence (AI) and machine learning (ML) operations. Neural engine 1420 is optimized for tasks such as advanced image processing, natural language processing, and pattern recognition, significantly improving the efficiency and speed of AI-related processes. Its architecture is designed to support a wide range of machine learning models while being highly energy-efficient, thereby enhancing the user experience through faster, more responsive applications and functionalities that rely on AI and ML technologies.

I/O interfaces 1411 are hardware, software, firmware or combinations thereof for interfacing with various input/output components in device 1400. I/O components may include devices such as keypads, buttons, audio devices, and sensors such as a global positioning system. I/O interfaces 1411 process data for sending data to such I/O components or process data received from such I/O components.

Network interface 1407 enables data to be exchanged between devices device 1400 and other devices via one or more networks (e.g., carrier or agent devices). For example, video or other image data may be received from other devices via network interface 1407 and be stored in system memory 1417 for subsequent processing (e.g., via a back-end interface to Image Signal Processor 1403, such as discussed below in FIG. 2) and display. The networks may include, but are not limited to, Local Area Networks (LANs) (e.g., an Ethernet or corporate network) and Wide Area Networks (WANs). The image data received via network interface 1407 may undergo image processing processes by Image Signal Processor 1403.

Sensor interface 1408 is circuitry for interfacing with motion sensor 1419. Sensor interface 1408 receives sensor information from motion sensor 1419 and processes the sensor information to determine the orientation or movement of the device 1400.

Display controller 1409 is circuitry for sending image data to be displayed on display 1410. Display controller 1409 receives the image data from Image Signal Processor 1403, central processing unit 1406, graphics processing unit 1412 or system memory 1417 and processes the image data into a format suitable for display on display 1410.

Memory controller 1413 is circuitry for communicating with system memory 1417. Memory controller 1413 may read data from system memory 1417 for processing by Image Signal Processor 1403, central processing unit 1406, graphics processing unit 1412 or other subcomponents of system on a chip 1402. Memory controller 1413 may also write data to system memory 1417 received from various subcomponents of system on a chip 1402.

Video encoder 1414 is hardware, software, firmware or a combination thereof for encoding video data into a format suitable for storing in persistent storage 1416 or for passing the data to network interface 1407 for transmission over a network to another device.

In some embodiments, one or more components of system on a chip 1402 or some functionality of these components may be performed by software components executed on Image Signal Processor 1403, central processing unit 1406, graphics processing unit 1412. Such software components may be stored in system memory 1417, persistent storage 1416 or another device communicating with device 1400 via network interface 1407.

Image data or video data may flow through various data paths within system on a chip 1402. In one example, raw image data may be generated from the image sensor 1401 and processed by Image Signal Processor 1403, and then sent to system memory 1417. After the image data is stored in system memory 1417, it may be accessed by graphics processing unit 1412, neural engine 1420, and/or video encoder 1414 for encoding or display 1410.

In another example, image data is received from sources other than the image sensor 1401. For example, video data may be streamed, downloaded, or otherwise communicated to the system on a chip 1402 via wired or wireless network. The image data may be received via network interface 1407 and written to system memory 1417 via memory controller 1413. The image data may then be obtained from system memory 1417 and processed Image Signal Processor 1403, graphics processing unit 1412, or neural engine 1420. The image data may then be returned to system memory 1417.

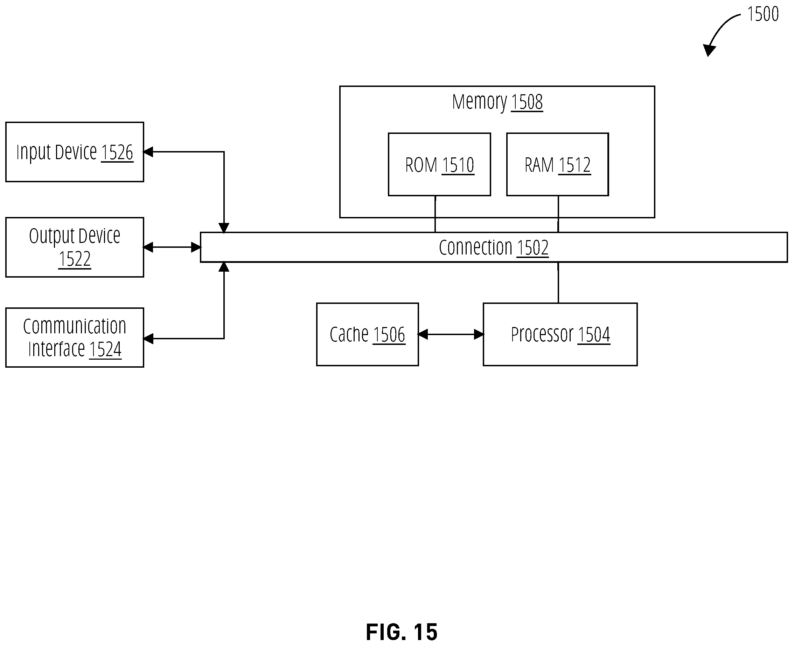

FIG. 15 shows an example of computing system 1500, which can be, for example, any computing device making up any engine, service, or component illustrated in FIG. 1 or any component thereof.

In some embodiments, computing system 1500 is a single device, or a distributed system in which the functions described in this disclosure can be distributed within a datacenter, multiple data centers, a peer network, etc. In some embodiments, one or more of the described system components represents many such components each performing some or all of the function for which the component is described. In some embodiments, the components can be physical or virtual devices.

In some embodiments, computing system 1500 may comprise one or more computing resources provisioned from a "cloud computing" provider, For example, AMAZON ELASTIC COMPUTE CLOUD ("AMAZON EC2"), provided by AMAZON, INC. of Seattle, Washington; SUN CLOUD COMPUTER UTILITY, provided by SUN MICROSYSTEMS, INC. of Santa Clara, California; AZURE, provided by MICROSOFT CORPORATION of Redmond, Washington, GOOGLE CLOUD PLATFORM, provided by ALPHABET, INC. of Mountain View, California, and the like.

Example computing system 1500 includes at least one processing unit (CPU or processor) 1504 and connection 1502 that couples various system components including system memory 1508, such as read-only memory (ROM) 1510 and random access memory (RAM) 1512 to processor 1504. Memory 1508 can be a volatile or non-volatile memory device, and can be a hard disk or other types of non-transitory computer readable media which can store data that are accessible by a computer, such as magnetic cassettes, flash memory cards, solid state memory devices, digital versatile disks, cartridges, random access memories (RAMs), read-only memory (ROM), and/or some combination of these devices.

Memory 1508 can include software services, servers, logic, etc., that when the code that defines such software is executed by the processor 1504, it causes the system to perform a function. In some embodiments, a hardware service that performs a particular function can include the software component stored in a computer-readable medium in connection with the necessary hardware components, such as processor 1504, connection 1502, output device 1522, etc., to carry out the function.

Computing system 1500 can include a cache of high-speed memory 1506 connected directly with, in close proximity to, or integrated as part of processor 1504.

Connection 1502 can be a physical connection via a bus, or a direct connection into processor 1504, such as in a chipset architecture. Connection 1502 can also be a virtual connection, networked connection, or logical connection.

Processor 1504 can include any general purpose processor and a hardware service or software service stored in memory 1508, configured to control processor 1504 as well as a special-purpose processor where software instructions are incorporated into the actual processor design. Processor 1504 may essentially be a completely self-contained computing system, containing multiple cores or processors, a bus, memory controller, cache, etc. A multi-core processor may be symmetric or asymmetric. Processor 1504 can be physical or virtual.

To enable user interaction, computing system 1500 includes an input device 1526, which can represent any number of input mechanisms, such as a microphone for speech, a touch-sensitive screen for gesture or graphical input, keyboard, mouse, motion input, speech, etc. Computing system 1500 can also include output device 1522, which can be one or more of a number of output mechanisms known to those of skill in the art. In some instances, multimodal systems can enable a user to provide multiple types of input/output to communicate with computing system 1500. Computing system 1500 can include communication interface 1524, which can generally govern and manage the user input and system output. There is no restriction on operating on any particular hardware arrangement, and therefore the basic features here may easily be substituted for improved hardware or firmware arrangements as they are developed.

In some embodiments, computing system 1500 can refer to a combination of a personal computing device interacting with components hosted in a data center, where both the computing device and the components in the data center. In such examples, both the personal computing device and the components in the datacenter might have a processor, cache, memory, storage, etc.

For clarity of explanation, in some instances the present technology may be presented as including individual functional blocks including functional blocks comprising devices, device components, steps or routines in a method embodied in software, or combinations of hardware and software.

Any of the steps, operations, functions, or processes described herein may be performed or implemented by a combination of hardware and software services or services, alone or in combination with other devices. In some embodiments, a service can be software that resides in memory of a client device and/or one or more servers of a content management system and perform one or more functions when a processor executes the software associated with the service. In some embodiments, a service is a program, or a collection of programs that carry out a specific function. In some embodiments, a service can be considered a server. The memory can be a non-transitory computer-readable medium.

In some embodiments the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer readable media. Such instructions can comprise, For example, instructions and data which cause or otherwise configure a general purpose computer, special purpose computer, or special purpose processing device to perform a certain function or group of functions. Portions of computer resources used can be accessible over a network. The computer executable instructions may be, For example, binaries, intermediate format instructions such as assembly language, firmware, or source code. Examples of computer-readable media that may be used to store instructions, information used, and/or information created during methods according to described examples include magnetic or optical disks, solid state memory devices, flash memory, USB devices provided with non-volatile memory, networked storage devices, and so on.

Devices implementing methods according to these disclosures can comprise hardware, firmware and/or software, and can take any of a variety of form factors. Typical examples of such form factors include servers, laptops, smart phones, small form factor personal computers, personal digital assistants, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

### Aspects:

The present technology includes computer-readable storage mediums for storing instructions, and systems for executing any one of the methods embodied in the instructions addressed in the aspects of the present technology presented below:
Aspect 1: A method comprising: receiving, by a language model, an instruction to provide at least some responses in a first syntax acceptable for a type in a first programming language; receiving, by the language model, at least one prompt from an application, wherein the at least part of the response to the at least one prompt will be in the first syntax acceptable for the type in the first programming language; retrieving, by the language model, rules defining the first syntax for the type in the first programming language from a compiler of the first programming language; creating, by the language model, from the rules from the compiler, a grammar that defines tokens that may be output by the language model; returning, by the language model, a response to the at least one prompt that is in the first syntax acceptable for the type in the first programming language.
Aspect 2: The method of aspect 1, wherein the language model generates output in a second programming language while receiving the at least one prompt and sending at least one reply in the first programming and language, the method comprising: wherein the rules defining the first syntax for the type in the first programming language further includes rules for translating between the type in the first programming language a second syntax in the second programming language, wherein the grammar is created from the rules for translation between the type in the first programming language to the second syntax in the second programming language and the grammar defines tokens that may be output by the language model that are valid within the second syntax acceptable for the second programming language; generating, by the language model, an internal response to the at least one prompt where the language model is constrained by the grammar to output the tokens that are valid within the second syntax; translating the internal response to the response to the at least one prompt using the rules for translation between the type in the first programming language to the second syntax in the second programming language.
Aspect 3: The method of any one of aspects 1-2, wherein the at least one prompt does not refer to the second programming language.
Aspect 4: The method of any one of aspects 1-3, wherein the language model has been trained to provide responses that should be in code in the second programming language when the at least one prompt does not explicitly request an alternate programming language by name.
Aspect 5: The method of any one of aspects 1-4, wherein the language model executes on a personal computing device.
Aspect 6: The method of any one of aspects 1-5, further comprising: generating, by the language model, response to the at least one prompt, wherein the language model is constrained by the grammar to output the tokens that are valid within the first syntax.
Aspect 7: The method of any one of aspects 1-6, wherein the grammar constrains the language model by masking valid tokens from a distribution of candidate tokens, whereby the language model is limited to selecting the valid tokens from the distribution of candidate tokens.
Aspect 8: The method of any one of aspects 1-7, further comprising: wherein the first grammar is implemented in a prefix tree, wherein the prefix tree includes branches that represent sequences of valid characters, based on a particular sequence of existing characters generated by the language model as part of the response, selecting particular branches of the prefix tree that correspond to the particular sequence of existing characters, wherein the particular branches correspond to valid candidate tokens; masking the valid candidate tokens to limit the language model to select from the valid candidate tokens, whereby the language model can only select the valid candidate tokens as a next token in the response.
Aspect 9: The method of any one of aspects 1-8, further comprising: when the grammar indicates there is a single valid candidate token, injecting a single valid candidate token into the response of the language model without the language model selecting the single valid candidate token as part of its inference process.
Aspect 10: The method of any one of aspects 1-9, wherein the grammar is a Backus-Naur Form (BNF) grammar.
Aspect 11: The method of any one of aspects 1-10, further comprising: wherein the instruction to provide at least some responses in the first syntax further defines a second syntax within the first syntax.
Aspect 12: The method of any one of aspects 1-11, wherein the first syntax is associated with the first grammar and the second syntax is associated with a second grammar, wherein the second grammar is constrained by the first syntax and the second syntax.
Aspect 13: The method of any one of aspects 1-12, further comprising: invoking, by the language model, the first grammar to generate a first portion of tokens; after generating the first portion of tokens, invoking, by the language model, the second grammar to generate a second portion of tokens.
Aspect 14: The method of any one of aspects 1-13, further comprising: determining, after generating a first portion of tokens using the first grammar, whether to continue using the first grammar, to use a second grammar, or to continue generation of tokens unconstrained by grammars.
Aspect 15: The method of any one of aspects 1-14, wherein the at least one prompt includes the instruction to provide the response in the first syntax acceptable for the type in a first programming language.
Aspect 16: The method of any one of aspects 1-15, wherein the instruction is provided prior to receiving the at least one prompt, wherein the instruction is effective in configuring the language model to be able to make a tool call, where the tool call is in the first syntax, wherein the at least one prompt causes the language model to decide to make the tool call by generating the tool call in the first syntax.
Aspect 17: A method of any one of aspects 1-16, further comprising: sending, by an application, an instruction to a language model to provide at least some responses in a first syntax acceptable for a type in a first programming language; sending, by the application, at least one prompt to the language model, wherein the response to the at least one prompt will be in the first syntax acceptable for the type in the first programming language, wherein the language model automatically creates a grammar, from rules gathered from a compiler, that defines tokens that may be output by the language model; receiving, by the application, a response to the at least one prompt that is in the first syntax acceptable for the type in the first programming language.
Aspect 18: A method of any one of aspects 1-17, further comprising: receiving, by language model, a first prompt during a first session; determining, by the language model, to call first tool based on the first prompt; calling, by the language model, the first tool; receiving, by the language model, a response from the first tool; copying the response from the first tool into a context window for the first session, whereby the context window includes the first prompt and the response from the first tool; generating, by the language model, a response to the first prompt using the response from the first tool.
Aspect 19: The method of any one of aspects 1-18, further comprising: prior to the receiving the first prompt, receiving, by a language model, an instruction to enable the language model to call the first tool, wherein the instruction includes a description of when the language model should call the first tool.
Aspect 20: The method of any one of aspects 1-19, wherein the first tool is supported by a software development kit of a device operating system, wherein the call of the first tool and the response from the first tool is subject to a service provided by the device operating system associated a device on which the language model is executing and that exposes an integration with the first tool.
Aspect 21: The method of any one of aspects 1-20, further comprising: receiving, by the language model, a session initialization message, wherein the session initialization message includes a set of tools that includes at least the first tool, the session initialization message enables the language model to call any of the set of tools during the session.
Aspect 22: The method of any one of aspects 1-21, wherein the language model is configured to call multiple tools, wherein the first tool is one of the multiple tools, the method comprising: determining by the language model which tool of the multiple tools to call in furtherance of responding to the first prompt.
Aspect 23: The method of any one of aspects 1-22, further comprising: calling, by the language model, a second tool that is one of the multiple tools, after receiving a response from the first tool, wherein the calling the second tool includes sending information based on the response from the first tool to the second tool; receiving, by the language model, the response from the second tool; copying the response from the second tool into a context window for the first session, whereby the context window includes the first prompt, the response from the first tool, and the response from the second tool; generating, by the language model, a response to the first prompt using the response from the first tool and the second tool.
Aspect 24: The method of any one of aspects 1-23, wherein the call of the first tool is through an API provided by a device operating system.
Aspect 25: The method of any one of aspects 1-24, wherein the call of the first tool is through an API available over the internet, wherein the API is called using structured JSON code.
Aspect 26: A method any one of aspects 1-25, further comprising: as part of a process of developing an application to be offered for download through an app store, creating an adapter to a first version of a base language model, whereby when the adapter is used with the first version of the base language model the base language model is a fine-tuned base language model for providing responses to queries that originate from the application; distilling the fine-tuned base language model into a distilled model; and submitting the application to the app store with the adapter and the distilled model.
Aspect 27: The method of any one of aspects 1-26, further comprising: submitting a metadata file to the app store, the metadata file defines a compatibility of the adapter with the first version of the base language model.
Aspect 28: The method of any one of aspects 1-27, wherein the adapter and distilled model are provided in a distinct container from the application, whereby the application can be separately downloaded by a user leaving the adapter and the distilled model for later retrieval.
Aspect 29: A method any one of aspects 1-28, further comprising: receiving, by an app store an application that is accompanied by an adapter and a distilled model, wherein when the adapter is used with a first version of the base language model, the base language model is a fine-tuned base language model for providing responses to queries that originate from the application, wherein the distilled model is distilled from a data set created from the fine-tuned base language model; providing the application to a first device in response to a request to download the application; and in a subsequent transaction, providing the adapter and the distilled model to the first device when the first device is running the first version of the base language model.
Aspect 30: A method any one of aspects 1-29, further comprising: downloading, by a computing device, an adapter associated with an application, wherein the adapter is specific to a first version of a base language model, wherein the adapter is a layer of weights that when combined with weights of the first version of the base language model yields a fine-tuned base language model for processing prompts from the application; receiving a prompt from the application; processing the prompt in an inference operation using the fine-tuned base language model to yield a response to the prompt.
Aspect 31: The method of any one of aspects 1-30, further comprising: downloading, by the computing device, a distilled model, wherein the distilled model is distilled from a data set created from the fine-tuned base language model, wherein the distilled model is a smaller model than the fine-tuned base language model that is configured to generate responses comparable to the fine-tuned base language model using less computing resources; and processing a second prompt from the application using the distilled model to yield a second response.
Aspect 32: The method of any one of aspects 1-31, the method further comprising: prior to their use, copying the adapter and distilled model from a storage location accessible by the application into a secure storage location accessible by a system process and not accessible by the application.
Aspect 33: The method of any one of aspects 1-32, further comprising: compiling the distilled model on the computing device prior to its use.
Aspect 34: The method of any one of aspects 1-33, further comprising: evaluating the second response by the fine-tuned base language model; and delivering the second response to the application when the fine-tuned base language model classifies the second response as acceptable.
Aspect 35: The method of any one of aspects 1-34, further comprising: evaluating the second response by the fine-tuned base language model; and revising the second response, by the fine-tuned base language model, into a revised response when the fine-tuned base language model does not consider the second response acceptable; and delivering the revised response to the application.
Aspect 36: The method of any one of aspects 1-35, wherein the base language model is stored and executed on the computing device, which is a user device.
Aspect 37: The method of any one of aspects 1-36, wherein the base language model and the application are stored and executed on the computing device.
Aspect 38: The method of any one of aspects 1-37, further comprising: downloading, by the computing device, a distilled model, wherein the distilled model is distilled from a data set created from the fine-tuned base language model; prior to their use, copying the adapter and distilled model from a storage location accessible by the application into a secure storage location accessible by a system process and not accessible by the application; performing a first part of an inference process based on a first prompt by the fine-tuned base language model; at least partially contemporaneous with the first part of the inference process, compiling the distilled model on the computing device prior to its use to yield a compiled distilled model; performing a second part of the inference process using the compiled distilled model, wherein a draft response is a result of the first part of the inference process and the second part of the inference process; and evaluating the draft response by the fine-tuned base language model; and sending the draft response to the application after the evaluation by the fine-tuned base language model.
Aspect 39: The method of any one of aspects 1-38, further comprising: processing, by the fine-tuned base language model, a collection of prompts to generate responses, wherein the collection of prompts are from a particular application operated by a particular user account; storing the collection of prompts and respective responses; when the collection of prompts and respective responses is above a threshold size, automatically creating a distilled model, wherein the distilled model is a smaller model than the fine-tuned base language model that is configured to generate responses comparable to the fine-tuned base language model using less computing resources; receiving a second prompt; and generating a second response to the second prompt using the distilled model.
Aspect 40: The method of any one of aspects 1-39, further comprising: determining that the base language model has been updated to a second version of the base language model; and downloading a second adapter that is specific to the second version of the base language model.
Aspect 41: A non-transitory computer-readable medium comprising instructions that, when executed, are effective to cause at least one processor to perform the method of any one of aspects 1-39.
Aspect 42: A system comprising the non-transitory computer-readable medium and the at least one processor of aspect 41.

Exemplary embodiments of the present disclosure are set out in the following items:
1. A method comprising:
   receiving, by a language model, an instruction to provide at least part of a response in a first syntax acceptable for a type in a first programming language;
   receiving, by the language model, at least one prompt from an application, wherein the response to the at least one prompt will be in the first syntax acceptable for the type in the first programming language;
   retrieving, by the language model, rules defining the first syntax for the type in the first programming language from a compiler of the first programming language;
   creating, by the language model, from the rules from the compiler, a first grammar that defines tokens that may be output by the language model;
   returning, by the language model, the at least the part of the response to the at least one prompt that is in the first syntax acceptable for the type in the first programming language.
2. The method of item 1, wherein the language model generates output in a second programming language while receiving the at least one prompt and sending the response in the first programming language.
3. The method of item 2, further comprising:
   generating, by the language model, an internal response to the at least one prompt where the language model is constrained by the grammar to output the tokens that are valid within the second syntax;
   translating the internal response to the response to the at least one prompt using the rules for translation from the second syntax in the second programming language to the first syntax in the first programming language.
4. The method of any of items 2-3, wherein the language model has been trained to provide responses that should be in code in the second programming language, wherein the at least one prompt does not explicitly request an alternate programming language by name.
5. The method of any of items 1-4, further comprising:
   generating, by the language model, the response to the at least one prompt, wherein the language model is constrained by the first grammar to output the tokens that are valid within the first syntax.
6. The method of any of items 1-5, further comprising:
   wherein the grammar is implemented in a prefix tree, wherein the prefix tree includes branches that represent sequences of valid characters,
   based on a particular sequence of existing characters generated by the language model as part of the response, selecting particular branches of the prefix tree that correspond to the particular sequence of existing characters, wherein the particular branches correspond to valid candidate tokens;
   masking the valid candidate tokens to limit the language model to select from the valid candidate tokens, whereby the language model can only select the valid candidate tokens as a next token in the response; and
   injecting the single valid candidate token into the response of the language model without the language model selecting the single valid candidate token as part of its inference process.
7. The method of any of items 1-6, further comprising:
   wherein the instruction to provide at least some responses in the first syntax further defines a second syntax within the first syntax, wherein the first syntax is associated with the first grammar and the second syntax is associated with a second grammar, wherein the second grammar is constrained by the first syntax and the second syntax.
8. The method of item 7, further comprising:
   invoking, by the language model, the first grammar to generate a first portion of tokens;
   after generating the first portion of tokens, invoking, by the language model, the second grammar to generate a second portion of tokens.
9. The method of any of items 1-8, wherein the instruction is provided prior to receiving the at least one prompt, wherein the instruction is effective in configuring the language model to be able to make a tool call, where the tool call is in the first syntax, wherein the at least one prompt causes the language model to decide to make the tool call by generating the tool call in the first syntax.
10. A method comprising:
   sending, by an application, an instruction to a language model to provide at least some output in a first syntax acceptable for a type in a first programming language;
   sending, by the application, at least one prompt to the language model, wherein the at least some output to the at least one prompt will be in the first syntax acceptable for the type in the first programming language, wherein the language model automatically creates a grammar, from rules gathered from a compiler, that defines tokens that may be output by the language model;
   receiving, by the application, a response to the at least one prompt, wherein the response to the at least one prompt is based on the at least some output in the first syntax.
11. The method of item 10, wherein the at least some output is in the form of an API call to a tool, wherein data from the tool is included in the response to the at least one prompt.
12. The method of any of items 10-11, wherein the language model generates the at least some output in a second programming language while receiving the at least one prompt and sending at least one reply in the first programming language, wherein the rules defining the first syntax for the type in the first programming language further include rules for translating between the type in the first programming language to a second syntax in the second programming language.
13. The method of any of items 10-12, wherein the language model was constrained by the grammar to output the tokens that are valid within the first syntax.
14. The method of any of items 10-13, wherein the instruction to provide at least some responses in the first syntax further defines a second syntax within the first syntax.
15. The method of item 14, wherein the first syntax is associated with the first grammar and the second syntax is associated with a second grammar, wherein the second grammar is constrained by the first syntax and the second syntax.
16. The method of any of items 10-15, wherein the instruction to the language model to provide the at least some output in the first syntax acceptable for the type in the first programming language, is a tool configuration instruction, wherein the tool configuration instruction defines a API in the first syntax, whereby the language model generates an API call in the first syntax and calls the tool using the API call.
17. A method comprising:
   receiving, by language model, a first prompt during a first session;
   calling, by the language model, a first tool based on the first prompt;
   receiving, by the language model, a response from the first tool;
   copying the response from the first tool into a context window for the first session, whereby the context window includes the first prompt and the response from the first tool;
   generating, by the language model, a response to the first prompt using the response from the first tool.
18. The method of item 17, further comprising:
   prior to the receiving the first prompt, receiving, by the language model, an instruction to enable the language model to call the first tool, wherein the instruction includes a description of a circumstance in which the language model should call the first tool.
19. The method of any of items 17-18, wherein the first tool is supported by a software development kit of a device operating system, wherein the call of the first tool and the response from the first tool is subject to a service provided by the device operating system associated a device on which the language model is executing and that exposes an integration with the first tool.
20. The method of any of items 17-19, further comprising:
   receiving, by the language model, a session initialization message, wherein the session initialization message includes a set of tools that includes at least the first tool, the session initialization message enables the language model to call any of the set of tools during the session.
21. The method of item 20, wherein the language model is configured to call multiple tools, wherein the first tool is one of the multiple tools, the method comprising:
   determining by the language model which tool of the multiple tools to call in furtherance of responding to the first prompt.
22. The method of item 21, further comprising:
   calling, by the language model, a second tool that is one of the multiple tools, after receiving a response from the first tool, wherein the calling the second tool includes sending information based on the response from the first tool to the second tool;
   receiving, by the language model, the response from the second tool;
   copying the response from the second tool into the context window for the first session, whereby the context window includes the first prompt, the response from the first tool, and the response from the second tool;
   generating, by the language model, a response to the first prompt using the response from the first tool and the second tool.
23. The method of any of items 17-22, wherein the call of the first tool is through an API provided by a device operating system.
24. The method of any of items 17-23, wherein the call of the first tool is through an API available over the internet, wherein the API is called using structured JSON code.
25. A method comprising:
   downloading, by a computing device, an adapter associated with an application, wherein the adapter is specific to a first version of a base language model, wherein the adapter is a layer of weights that are combined with weights of the first version of the base language model to yield a fine-tuned base language model for processing prompts from the application;
   receiving a prompt from the application;
   processing the prompt in an inference operation using the fine-tuned base language model to yield a response to the prompt.
26. The method of item 25, further comprising:
   downloading, by the computing device, a distilled model, wherein the distilled model is distilled from a data set created from the fine-tuned base language model, wherein the distilled model is a smaller model than the fine-tuned base language model that is configured to generate responses comparable to the fine-tuned base language model using less computing resources; and
   processing a second prompt from the application using the distilled model to yield a second response.
27. The method of item 26, the method further comprising:
   prior to their use, copying the adapter and the distilled model from a storage location accessible by the application into a secure storage location accessible by a system process and not accessible by the application.
28. The method of any of items 26-27, further comprising:
   compiling the distilled model on the computing device prior to its use.
29. The method of any of items 26-28, further comprising:
   evaluating the second response by the fine-tuned base language model; and
   delivering the second response to the application after the fine-tuned base language model classifies the second response as acceptable.
30. The method of any of items 26-29, further comprising:
   evaluating the second response by the fine-tuned base language model; and
   revising the second response, by the fine-tuned base language model, into a revised response when the fine-tuned base language model does not consider the second response acceptable; and
   delivering the revised response to the application.
31. The method of any of items 25-30, wherein the base language model is stored and executed on the computing device, which is a user device.
32. The method of any of items 25-31, wherein the base language model and the application are stored and executed on the computing device.
33. The method of any of items 25-32, further comprising:
   downloading, by the computing device, a distilled model, wherein the distilled model is distilled from a data set created from the fine-tuned base language model;
   prior to their use, copying the adapter and the distilled model from a storage location accessible by the application into a secure storage location accessible by a system process and not accessible by the application;
   performing a first part of an inference process based on a first prompt by the fine-tuned base language model;
   at least partially contemporaneous with the first part of the inference process, compiling the distilled model on the computing device prior to its use to yield a compiled distilled model;
   performing a second part of the inference process using the compiled distilled model, wherein a draft response is a result of the first part of the inference process and the second part of the inference process; and
   evaluating the draft response by the fine-tuned base language model; and
   sending the draft response to the application after the evaluation by the fine-tuned base language model.
34. A computing system comprising:
   at least one processor; and
   a memory storing instructions that, when executed by the at least one processor, configure the computing system to:
   receive, by a language model, an instruction to provide at least part of a response in a first syntax acceptable for a type in a first programming language;
   receive, by the language model, at least one prompt from an application, wherein the response to the at least one prompt will be in the first syntax acceptable for the type in the first programming language;
   retrieve, by the language model, rules defining the first syntax for the type in the first programming language from a compiler of the first programming language;
      create, by the language model, from the rules from the compiler, a first grammar that defines tokens that may be output by the language model;
   return, by the language model, the at least the part of the response to the at least one prompt that is in the first syntax acceptable for the type in the first programming language.
35. The computing system of item 34, wherein the language model generates output in a second programming language while receive the at least one prompt and sending the response in the first programming language.
36. The computing system of item 35, wherein the instructions further configure the computing system to:
   generate, by the language model, an internal response to the at least one prompt where the language model is constrained by a second grammar to output the tokens that are valid within a second syntax;
   translate the internal response to the response to the at least one prompt using the rules for translation from the second syntax in the second programming language to the first syntax in the first programming language.
37. The computing system of any of items 35-36, wherein the language model has been trained to provide responses that should be in code in the second programming language, wherein the at least one prompt does not explicitly request an alternate programming language by name.
38. The computing system of any of items 34-37, wherein the instructions further configure the computing system to:
   wherein the first grammar is implemented in a prefix tree, wherein the prefix tree includes branches that represent sequences of valid characters,
   based on a particular sequence of existing characters generated by the language model as part of the response, select particular branches of the prefix tree that correspond to the particular sequence of existing characters, wherein the particular branches correspond to valid candidate tokens;
   mask the valid candidate tokens to limit the language model to select from the valid candidate tokens, whereby the language model can only select the valid candidate tokens as a next token in the response; and
   when the masking valid candidate tokens yields a single valid candidate token, inject the single valid candidate token into the response of the language model without the language model selecting the single valid candidate token as part of its inference process.
39. The computing system of any of items 34-38, wherein the instructions further configure the computing system to:
   wherein the instruction to provide at least some responses in the first syntax further defines a second syntax within the first syntax, wherein the first syntax is associated with the first grammar and the second syntax is associated with a second grammar, wherein the second grammar is constrained by the first syntax and the second syntax.
40. The computing system of item 39, wherein the instructions further configure the computing system to:
   invoke, by the language model, the first grammar to generate a first portion of tokens;
   after generating the first portion of tokens, invoke, by the language model, the second grammar to generate a second portion of tokens.
41. A non-transitory computer-readable storage medium comprising instructions stored thereon that when executed by at least one processor, cause the at least one processor to:
   receive, by a language model, an instruction to provide at least part of a response in a first syntax acceptable for a type in a first programming language;
   receive, by the language model, at least one prompt from an application, wherein the response to the at least one prompt will be in the first syntax acceptable for the type in the first programming language;
   retrieve, by the language model, rules defining the first syntax for the type in the first programming language from a compiler of the first programming language;
   create, by the language model, from the rules from the compiler, a first grammar that defines tokens that may be output by the language model;
   return, by the language model, the at least the part of the response to the at least one prompt that is in the first syntax acceptable for the type in the first programming language.
42. The non-transitory computer-readable storage medium of item 41, wherein the language model generates output in a second programming language while receive the at least one prompt and sending the response in the first programming language.
43. The non-transitory computer-readable storage medium of item 42, wherein the instructions further configure the at least one processor to:
   generate, by the language model, an internal response to the at least one prompt where the language model is constrained by a second grammar to output the tokens that are valid within a second syntax;
   translate the internal response to the response to the at least one prompt using the rules for translation from the second syntax in the second programming language to the first syntax in the first programming language.
44. The non-transitory computer-readable storage medium of any of items 42-43, wherein the language model has been trained to provide responses that should be in code in the second programming language, wherein the at least one prompt does not explicitly request an alternate programming language by name.
45. A computing system comprising:
   at least one processor; and
   a memory storing instructions that, when executed by the at least one processor, configure the computing system to:
      receive, by language model, a first prompt during a first session;
      call, by the language model, a first tool based on the first prompt;
      receive, by the language model, a response from the first tool;
      copy the response from the first tool into a context window for the first session, whereby the context window includes the first prompt and the response from the first tool;
      generate, by the language model, a response to the first prompt using the response from the first tool.
46. The computing system of item 45, wherein the instructions further configure the computing system to:
   prior to the receive the first prompt, receiving, by the language model, an instruction to enable the language model to call the first tool, wherein the instruction includes a description of a circumstance in which the language model should call the first tool.
47. The computing system of any of items 45-46, wherein the first tool is supported by a software development kit of a device operate system, wherein the call of the first tool and the response from the first tool is subject to a service provided by the device operating system associated a device on which the language model is executing and that exposes an integration with the first tool.
48. The computing system of any of items 45-47, wherein the instructions further configure the computing system to:
   receive, by the language model, a session initialization message, wherein the session initialization message includes a set of tools that includes at least the first tool, the session initialization message enables the language model to call any of the set of tools during the session.
49. The computing system of any of items 45-48, wherein the language model is configured to call multiple tools, wherein the first tool is one of the multiple tools, wherein the instructions further configure the computing system to:
   determine by the language model which tool of the multiple tools to call in furtherance of responding to the first prompt.
50. The computing system of item 49, wherein the instructions further configure the computing system to:
   call, by the language model, a second tool that is one of the multiple tools, after receiving the response from the first tool, wherein the calling the second tool includes sending information based on the response from the first tool to the second tool;
   receive, by the language model, the response from the second tool;
   copy the response from the second tool into the context window for the first session, whereby the context window includes the first prompt, the response from the first tool, and the response from the second tool;
   wherein the generation, by the language model, of the response to the first prompt uses the response from the first tool and the second tool.
51. A non-transitory computer-readable storage medium comprising instructions stored thereon that when executed by at least one processor, cause the at least one processor to:
   receive, by language model, a first prompt during a first session;
   call, by the language model, a first tool based on the first prompt;
   receive, by the language model, a response from the first tool;
   copy the response from the first tool into a context window for the first session, whereby the context window includes the first prompt and the response from the first tool;
   generate, by the language model, a response to the first prompt using the response from the first tool.
52. The non-transitory computer-readable storage medium of item 51, wherein the instructions further configure the at least one processor to:
   prior to the receive the first prompt, receiving, by the language model, an instruction to enable the language model to call the first tool, wherein the instruction includes a description of a circumstance in which the language model should call the first tool.
53. The non-transitory computer-readable storage medium of any of items 51-52, wherein the first tool is supported by a software development kit of a device operate system, wherein the call of the first tool and the response from the first tool is subject to a service provided by the device operating system associated a device on which the language model is executing and that exposes an integration with the first tool.
54. The non-transitory computer-readable storage medium of any of items 51-53, wherein the instructions further configure the at least one processor to:
   receive, by the language model, a session initialization message, wherein the session initialization message includes a set of tools that includes at least the first tool, the session initialization message enables the language model to call any of the set of tools during the session.
55. The non-transitory computer-readable storage medium of any of items 51-54, wherein the language model is configured to call multiple tools, wherein the first tool is one of the multiple tools, wherein the instructions further configure the at least one processor to:
   determine by the language model which tool of the multiple tools to call in furtherance of responding to the first prompt.
56. The non-transitory computer-readable storage medium of item 55, wherein the instructions further configure the at least one processor to:
   call, by the language model, a second tool that is one of the multiple tools, after receiving the response from the first tool, wherein the calling the second tool includes sending information based on the response from the first tool to the second tool;
   receive, by the language model, the response from the second tool;
   copy the response from the second tool into the context window for the first session, whereby the context window includes the first prompt, the response from the first tool, and the response from the second tool;
   wherein the generation, by the language model, of the response to the first prompt uses the response from the first tool and the second tool.

## Claims

1. A method comprising:
receiving, by a language model, a first prompt during a first session;
calling, by the language model, a first tool based on the first prompt;
receiving, by the language model, a response from the first tool;
copying the response from the first tool into a context window for the first session, whereby the context window includes the first prompt and the response from the first tool;
generating, by the language model, a response to the first prompt using the response from the first tool.

2. The method of claim 1, further comprising:
prior to receiving the first prompt, receiving, by the language model, an instruction to enable the language model to call the first tool, wherein the instruction includes a description of a circumstance in which the language model should call the first tool.

3. The method of any one of claims 1-2, wherein the first tool is supported by a software development kit of a device operating system, wherein calling the first tool and the response from the first tool is subject to a service provided by the device operating system associated with a device on which the language model is executing and that exposes an integration with the first tool.

4. The method of any one of claims 1-3, further comprising:
receiving, by the language model, a session initialization message, wherein the session initialization message includes a set of tools that includes at least the first tool, and wherein the session initialization message enables the language model to call any of the set of tools during the first session.

5. The method of claim 4, wherein the language model is configured to call multiple tools, wherein the first tool is one of the multiple tools, and wherein the method further comprises:
determining, by the language model, which tool of the multiple tools to call in furtherance of responding to the first prompt.

6. The method of claim 5, further comprising:
calling, by the language model, a second tool that is one of the multiple tools, after receiving the response from the first tool, wherein calling the second tool includes sending information based on the response from the first tool to the second tool;
receiving, by the language model, the response from the second tool;
copying the response from the second tool into the context window for the first session, whereby the context window includes the first prompt, the response from the first tool, and the response from the second tool;
generating, by the language model, a second response to the first prompt using the response from the first tool and the response from the second tool.

7. The method of any one of claims 1-6, wherein calling the first tool is through an API provided by a device operating system.

8. The method of any one of claims 1-7, wherein calling the first tool is through an API available over the internet, wherein the API is called using structured JSON code.

9. A computing system, comprising:
at least one processor; and
a memory storing instructions that, when executed by the at least one processor, cause the computing system to perform the method of any one of claims 1-8.

10. A computer-readable storage medium comprising instructions stored thereon, wherein the instructions, when executed by at least one processor of a computing system, cause the computing system to perform the method of any one of claims 1-8.
